(19) **Europäisches Patentamt**
**European Patent Office**
**Office européen des brevets**

(11) **EP 4 694 443 A2**

(12) **EUROPEAN PATENT APPLICATION**

(43) Date of publication:
**11.02.2026 Bulletin 2026/07**

(21) Application number: **25223085.9**

(22) Date of filing: **19.10.2021**

(51) International Patent Classification (IPC):
**H04W 72/04** (2023.01)

(52) Cooperative Patent Classification (CPC):
**H04W 72/02; H04L 1/1812; H04L 1/1854;**
**H04L 5/0064; H04W 72/1263; H04W 72/21;**
**H04W 72/566; H04W 72/569;** H04W 72/0446

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **19.10.2020 US 202063093526 P**

(62) Document number(s) of the earlier application(s) in
accordance with Art. 76 EPC:
**21806430.1 / 4 229 948**

(71) Applicant: **Telefonaktiebolaget LM Ericsson**
**(publ)**
**164 83 Stockholm (SE)**

(72) Inventors:
• **Andersson, Mattias**
**SE-172 39 SUNDBYBERG (SE)**

• **Fröberg Olsson, Jonas**
**SE-585 74 LJUNGSBRO (SE)**
• **Falahati, Sorour**
**STOCKHOLM SE-112 29 (SE)**

(74) Representative: **Ericsson**
**Patent Development**
**Torshamnsgatan 21-23**
**164 80 Stockholm (SE)**

Remarks:
This application was filed on 12-12-2025 as a
divisional application to the application mentioned
under INID code 62.

(54) **METHOD FOR MULTIPLEXING CHANNELS OF DIFFERENT PRIORITY INDEX**

(57) A communication device, a computer program, a computer program product and a method performed by a communication device (400, 910, 1000, 1130, 1140, 1291, 1292, 1330) are provided. The operations performed include running (701) a multiplexing procedure for all channels designated as low priority channels without considering presence of channels designated as high priority channels to create a set of non-overlapping low priority channels. The operations include running (703) the multiplexing procedure for all high priority channels without considering presence of low priority channels to create a set of non-overlapping high priority channels. The operations include responsive to there being an overlap between a non-overlapping low priority channel and a non-overlapping high priority channel, resolving (705) the overlap.

**Figure 7**

EP 4 694 443 A2

**Description**

TECHNICAL FIELD

The present disclosure relates generally to communications, and more particularly to communication methods and related devices and nodes supporting wireless communications.

BACKGROUND

In Rel-16 of 3GPP (3rd generation partnership project), the procedure for reporting multiple UCI (uplink control information) types is specified in Section 9.2.5 of 38.213-g30.

In Rel-16, only UCI of same priority index can be multiplexed, and UCI can only be multiplexed on a PUSCH (physical uplink shared channel) if UCI and PUSCH are associated with the same priority index. For a same priority index. a UE (user equipment) can only be indicated to transmit overlapping PUCCHs (physical uplink control channels) or overlapping PUCCH(s) and PUSCH(s) in a slot where the below timeline conditions are fulfilled.

If a UE would transmit multiple overlapping PUCCHs in a slot or overlapping PUCCH(s) and PUSCH(s) in a slot and, when applicable as described in Clauses 9.2.5.1 and 9.2.5.2, the UE is configured to multiplex different UCI types in one PUCCH, and at least one of the multiple overlapping PUCCHs or PUSCHs is in response to a DCI (downlink control information) format detection by the UE, the UE multiplexes all corresponding UCI types if the following conditions are met. If one of the PUCCH transmissions or PUSCH transmissions is in response to a DCI format detection by the UE, the UE expects that the first symbol $S_0$ of the earliest PUCCH or PUSCH, among a group overlapping PUCCHs and PUSCHs in the slot, satisfies the following timeline conditions:

- $S_0$ is not before a symbol with cyclic prefix (CP) starting after $T_{proc,1}^{mux}$ after a last symbol of any corresponding PDSCH (physical downlink shared channel), $T_{proc,1}^{mux}$ is given by maximum of $\{T_{proc,1}^{mux,1}, \cdots, T_{proc,1}^{mux,i}, \cdots\}$ where for the i-th PDSCH with corresponding HARQ-ACK (hybrid automatic repeat request - acknowledge) transmission on a PUCCH which is in the group of overlapping PUCCHs and PUSCHs,

$$T_{proc,1}^{mux,i} = \left(N_1 + d_{1,1} + 1\right) \cdot (2048 + 144) \cdot \kappa \cdot 2^{-\mu} \cdot T_C$$ , $d_{1,1}$ is selected for the i-th PDSCH following [6, TS 38.214], $N_1$ is selected based on the UE physical downlink shared channel (PDSCH) processing capability of the i-th PDSCH and SCS (subcarrier spacing) configuration $\mu$, where $\mu$ corresponds to the smallest SCS configuration among the SCS configurations used for the physical downlink control channel (PDCCH) scheduling the i-th PDSCH, the i-th PDSCH, the PUCCH with corresponding HARQ-ACK transmission for the i-th PDSCH, and all PUSCHs in the group of overlapping PUCCHs and PUSCHs.

- $S_0$ is not before a symbol with CP starting after $T_{proc,release}^{mux}$ after a last symbol of any corresponding SPS (semi-persistent scheduling) PDSCH release or of a DCI format 1_1 indicating SCell dormancy as described in Clause 10.3, or of a DCI format 1_1 indicating a request for a Type-3 HARQ-ACK codebook report without scheduling PDSCH.

$T_{proc,release}^{mux}$ is given by maximum of $\{T_{proc,release}^{mux,1}, \cdots, T_{proc,release}^{mux,i}, \cdots\}$ where for the i-th PDCCH providing the SPS PDSCH release or the DCI format 1_1 with corresponding HARQ-ACK transmission on a PUCCH which is in the group of overlapping PUCCHs and PUSCHs,

$$T_{proc,release}^{mux,i} = (N + 1) \cdot (2048 + 144) \cdot \kappa \cdot 2^{-\mu} \cdot T_C$$ , $N$ as described in Clause 10.2, or DCI format 1_1 that requests Type-3 HARQ-ACK codebook report as described in Clause 10.2, or the DCI format 1_1 indicating SCell dormancy as described in Clause 10.3, where $\mu$ corresponds to the smallest SCS configuration among the SCS configurations used for the PDCCH providing the i-th SPS PDSCH release or the DCI format 1_1, the PUCCH with corresponding HARQ-ACK transmission for the i-th SPS PDSCH release or the DCI format 1_1, and all PUSCHs in the group of overlapping PUCCHs and PUSCHs.

- if there is no aperiodic channel state information (CSI) report multiplexed in a PUSCH in the group of overlapping PUCCHs and PUSCHs, $S_0$ is not before a symbol with CP starting after $T_{proc,2}^{mux}$ after a last symbol of

  - any PDCCH with the DCI format scheduling an overlapping PUSCH, and
  - any PDCCH scheduling a PDSCH or SPS PDSCH release, or a DCI format 1_1 indicating a request for a Type-3 HARQ-ACK codebook report without

scheduling PDSCH, with corresponding HARQ-ACK information in an overlapping PUCCH in the slot

If there is at least one PUSCH in the group of overlapping PUCCHs and PUSCHs, $T_{proc,2}^{mux}$ is given by maximum of $\{T_{proc,2}^{mux,1}, \cdots, T_{proc,2}^{mux,i}, \cdots\}$ where for the i-th PUSCH which is in the group of overlapping PUCCHs and PUSCHs,

$$T_{proc,2}^{mux,i} = max\left((N_2 + d_{2,1} + 1) \cdot (2048 + 144) \cdot \kappa \cdot 2^{-\mu} \cdot T_C + T_{\text{switch}}, d_{2,2}\right)$$

, $d_{2,1}$, $d_{2,2}$ and $T_{\text{switch}}$ are selected for the i-th PUSCH following [6, TS 38.214], $N_2$ is selected based on the UE PUSCH processing capability of the i-th PUSCH and SCS configuration $\mu$, where $\mu$ corresponds to the smallest SCS configuration among the SCS configurations used for the PDCCH scheduling the i-th PUSCH, the PDCCHs scheduling the PDSCHs or providing the SPS PDSCH releases with corresponding HARQ-ACK transmission on a PUCCH which is in the group of overlapping PUCCHs/PUSCHs, and all PUSCHs in the group of overlapping PUCCHs and PUSCHs.

If there is no PUSCH in the group of overlapping PUCCHs and PUSCHs, $T_{proc,2}^{mux}$ is given by maximum of $\{T_{proc,2}^{mux,1}, \cdots, T_{proc,2}^{mux,i}, \cdots\}$ where for the i-th PDSCH or the i-th SPS PDSCH release with corresponding HARQ-ACK transmission on a PUCCH which is in the group of overlapping PUCCHs,

$$T_{proc,2}^{mux,i} = (N_2 + 1) \cdot (2048 + 144) \cdot \kappa \cdot 2^{-\mu} \cdot T_C$$

, $N_2$ is selected based on the UE PUSCH processing capability of the PUCCH serving cell if configured. $N_2$ is selected based on the UE PUSCH processing capability 1, if PUSCH processing capability is not configured for the PUCCH serving cell. $\mu$ is selected based on the smallest SCS configuration between the SCS configuration used for the PDCCH scheduling the i-th PDSCH or providing the i-th SPS PDSCH release with corresponding HARQ-ACK transmission on a PUCCH which is in the group of overlapping PUCCHs, and the SCS configuration for the PUCCH serving cell.

- if there is an aperiodic CSI report multiplexed in a PUSCH in the group of overlapping PUCCHs and PUSCHs, $S_0$ is not before a symbol with CP starting after

$$T_{proc,CSI}^{mux} = max\left((Z + d) \cdot (2048 + 144) \cdot \kappa \cdot 2^{-\mu} \cdot T_C + T_{\text{switch}}, d_{2,2}\right)$$

after a last symbol of

- any PDCCH with the DCI format scheduling an overlapping PUSCH, and
- any PDCCH scheduling a PDSCH, or SPS PDSCH release, or providing a DCI format 1_1 indicating SCell dormancy, or a DCI format 1_1 indicating a request for a Type-3 HARQ-ACK codebook report without scheduling PDSCH, with corresponding HARQ-ACK information in an overlapping PUCCH in the slot
  where $\mu$ corresponds to the smallest SCS configuration among the SCS configuration of the PDCCHs, the smallest SCS configuration for the group of the overlapping PUSCHs, and the smallest SCS configuration of CSI-RS associated with the DCI format scheduling the PUSCH with the multiplexed aperiodic CSI report, and d = 2 for $\mu = 0,1$, $d = 3$ for $\mu = 2$ and d = 4 for $\mu = 3$

- $N_1$, $N_2$, $d_{1,1}$, $d_{2,1}$, $d_{2,2}$, and Z are defined in [6, TS 38.214], and $\kappa$ and $T_C$ are defined in [4, TS 38.211].

The UE multiplex different UCI types (HARQ-ACK, SR (scheduling request) and CSI (channel state information)) on determined non-overlapping PUCCHs according to following pseudo-code:

Set *Q* to the set of resources for transmission of corresponding PUCCHs in a single slot without repetitions where

- a resource with earlier first symbol is placed before a resource with later first symbol
- for two resources with same first symbol, the resource with longer duration is placed before the resource with shorter duration
- for two resources with same first symbol and same duration, the placement is arbitrary
- the above three steps for the set Q are according to a subsequent pseudo-code for a function order(Q)
- a resource for negative SR transmission that does not overlap with a resource for HARQ-ACK or CSI transmission is excluded from set Q
- if the UE is not provided *simultaneousHARQ-ACK-CSI* and resources for transmission of HARQ-ACK information include PUCCH format 0 or PUCCH format 2, resources that include PUCCH format 2, or PUCCH format 3, or PUCCH format 4 for transmission of CSI reports are excluded from the set Q if they overlap with any resource from the resources for transmission of HARQ-ACK information
- if the UE is not provided *simultaneousHARQ-ACK-CSI* and at least one of the resources for transmission of HARQ-ACK information includes PUCCH format 1, PUCCH format 3, or PUCCH format 4
- resources that include PUCCH format 3 or PUCCH format 4 for transmission of CSI reports are excluded from the set Q
- resources that include PUCCH format 2 for transmission of CSI reports are excluded from the set Q if they overlap with any resource from the resources for transmission of HARQ-ACK information

Set $\mathcal{C}(Q)$ to the cardinality of $Q$
Set $Q(j,0)$ to be the first symbol of resource $Q(j)$ in the slot
Set $L(Q(j))$ to be the number of symbols of resource $Q(j)$ in the slot
Set $j = 0$ - index of first resource in set $Q$
Set $o = 0$ - counter of overlapped resources
while $j \leq \mathcal{C}(Q)-1$

$\quad$ if $j < \mathcal{C}(Q)-1$ and resource $Q(j-o)$ overlaps with resource $Q(j+1)$

$\quad\quad o = o+1$

$\quad\quad j = j+1$

$\quad$ else

$\quad\quad$ if $o > 0$

$\quad\quad\quad$ determine a single resource for multiplexing UCI associated with resources $\{Q(j-o),Q(j-o+1),...,Q(j)\}$ as described in Clauses 9.2.5.0, 9.2.5.1 and 9.2.5.2

$\quad\quad\quad$ set the index of the single resource to $j$

$\quad\quad\quad Q = Q \setminus \{Q(j-o),Q(j-o+1),...,Q(j-1)\}$

$\quad\quad\quad j = 0$ % start from the beginning after reordering unmerged resources at next step

$\quad\quad\quad o = 0$

$\quad\quad\quad$ order$(Q)$ % function that re-orders resources in current set $Q$

$\quad\quad\quad$ Set $\mathcal{C}(Q)$ to the cardinality of $Q$

$\quad\quad$ else

$\quad\quad\quad j = j+1$

$\quad\quad$ end if

$\quad$ end if

end while

The function order(Q) performs the following pseudo-code

$$\{$$

$$k = 0$$

while $k < \mathscr{C}(Q) - 1$ % the next two while loops are to re-order the unmerged resources

$$l = 0$$

while $l < \mathscr{C}(Q) - 1 - k$

if $Q(l,0) > Q(l+1,0)$ OR $(Q(l,0) = Q(l+1,0) \& L(Q(l)) < L(Q(l+1)))$

$$\text{temp} = Q(l)$$

$$Q(l) = Q(l+1)$$

$$Q(l+1) = \text{temp}$$

end if

$$l = l + 1$$

end while

$$k = k + 1$$

end while

## SUMMARY

The current rules for handling UCI with different priorities do not ensure that low priority UCI survives. There are also issues with handling overlapping UCI when some are on sub-slot level and some are on slot-level.

Various embodiments of inventive concepts run a multiplexing procedure for all channels designated as low priority channels without considering presence of channels designate as high priority channels to create a set of non-overlapping low priority channels and run the multiplexing procedure for all high priority channels without considering presence of low priority channels to create a set of non-overlapping high priority channels. Responsive to there being an overlap between a non-overlapping low priority channel and a non-overlapping high priority channel, the overlap is resolved.

Communication devices, computer programs, and computer program codes having analogous operations are also provided.

Advantages that may be achieved with some of these various embodiments of inventive concepts described herein is that channels including UCI of low priority index will not be cancelled when time-overlapping with one or more channels with high priority channels, instead UCI of low-priority can be multiplexed on high-priority channels

## BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:

Figure 1 is an illustration where a low priority(LP) PUCCH is included in intersection of two sub-groups of overlapping channels where the LP PUCCH is multiplexed in a first multiplexing onto a LP PUSCH and then multiplexed in a second multiplexing with a high priority (HP) PUCCH onto a HP+LP PUCCH according to some embodiments of inventive concepts;

Figure 2 is an illustration of fulfilled multiplexing timeline conditions on a sub slot level according to some embodiments of inventive concepts;

Figure 3 is an illustration of a scenario where LP PUCCH that starts early in a slot will not be comprised in Q if the procedure is run at a time after t1 according to some embodiments of inventive concepts;

Figure 4 is a block diagram illustrating a wireless device UE according to some embodiments of inventive concepts;

Figure 6 is a block diagram illustrating a radio access network RAN node (e.g., a base station eNB/gNB) according to some embodiments of inventive concepts;

Figure 7 is a block diagram illustrating a core network CN node (e.g., an access and mobility management function (AMF) node, a session management function (SMF) node, etc.) according to some embodiments of inventive concepts;

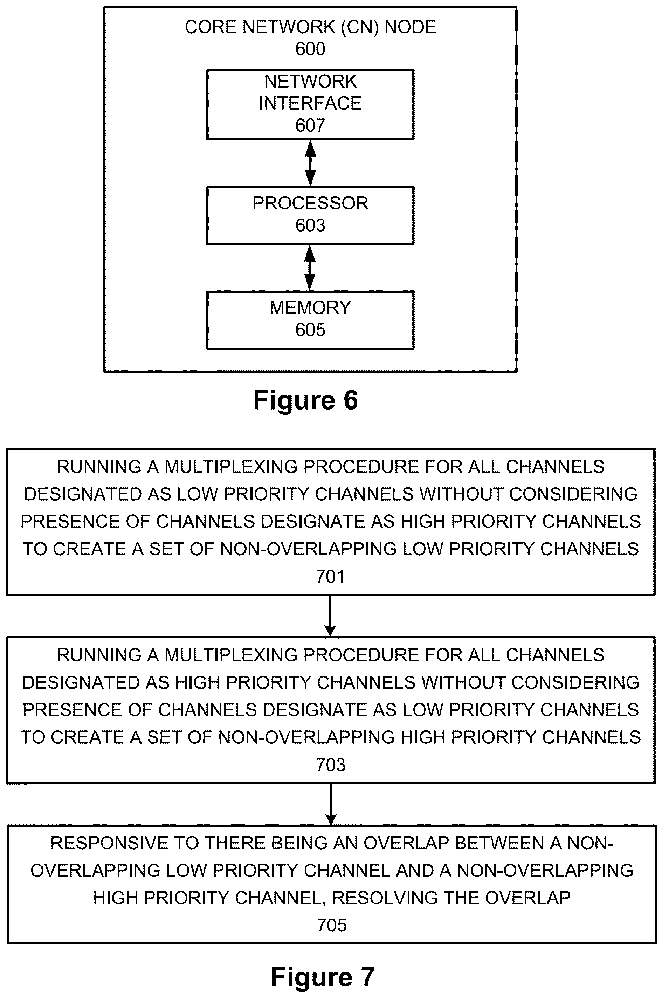

Figure 7-8 are flow charts illustrating operations of a communication device according to some embodiments of inventive concepts;

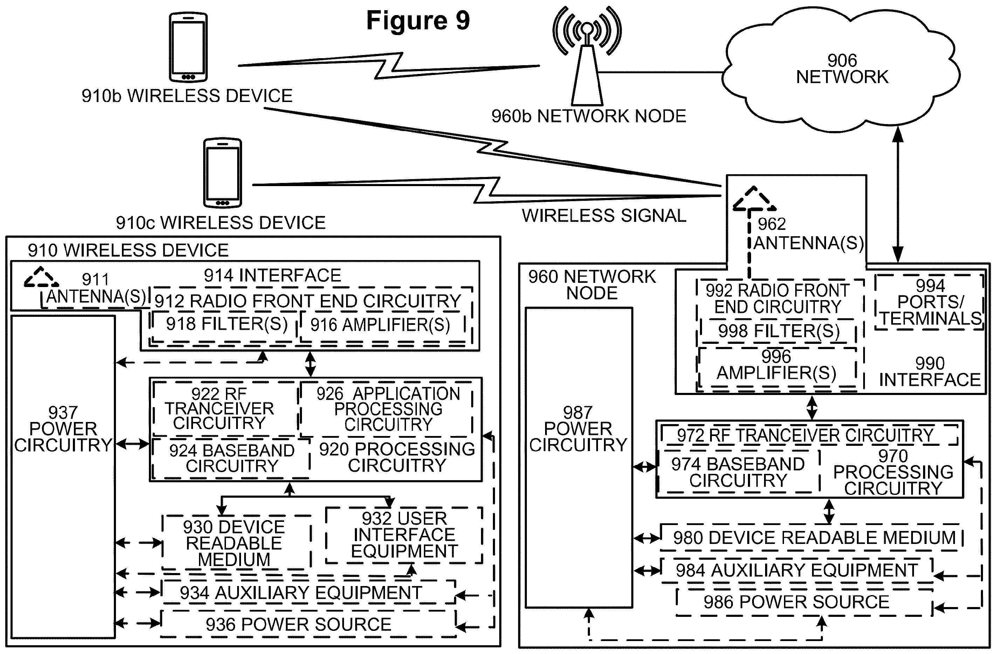

Figure 9 is a block diagram of a wireless network in accordance with some embodiments;

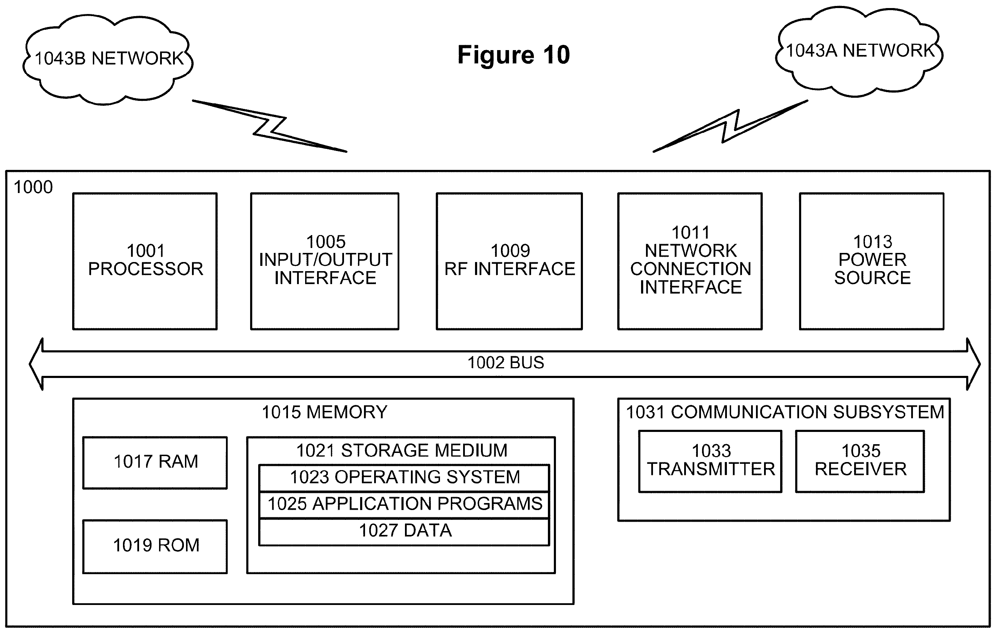

Figure 10 is a block diagram of a user equipment in accordance with some embodiments

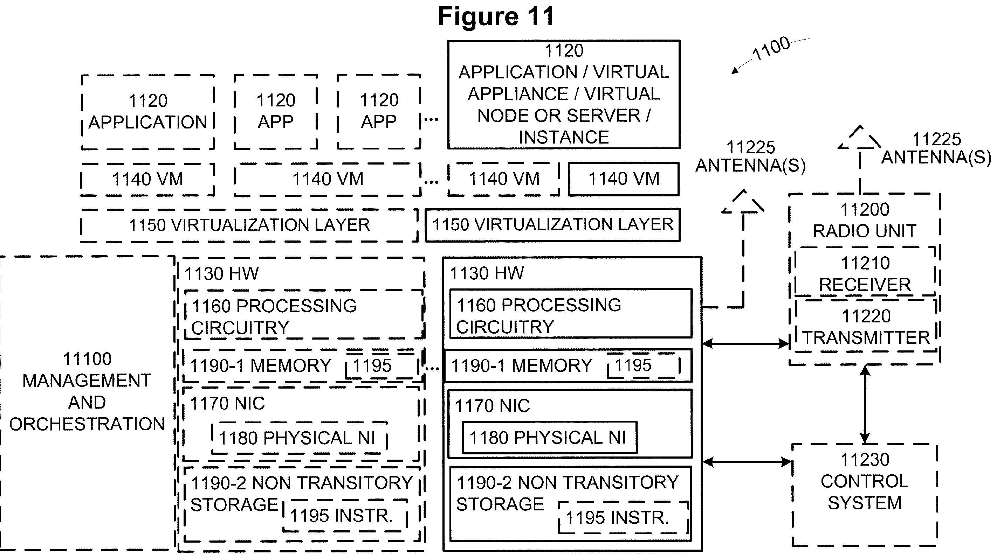

Figure 11 is a block diagram of a virtualization environment in accordance with some embodiments;

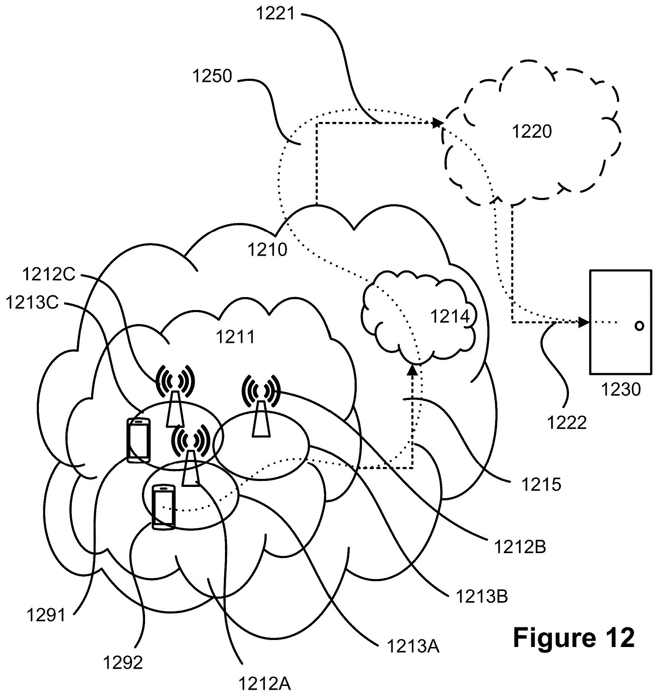

Figure 12 is a block diagram of a telecommunication network connected via an intermediate network to a host computer in accordance with some embodiments;

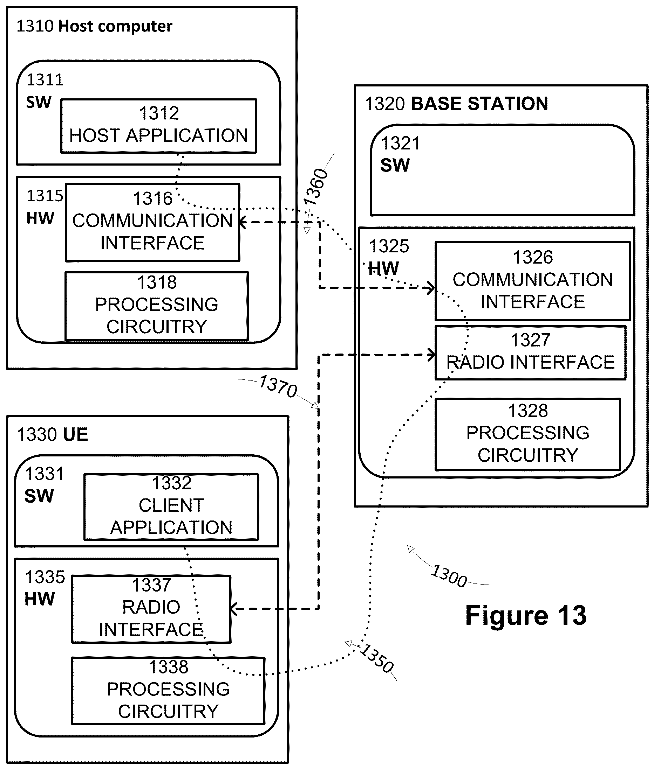

Figure 13 is a block diagram of a host computer communicating via a base station with a user equipment over a partially wireless connection in accordance with some embodiments;

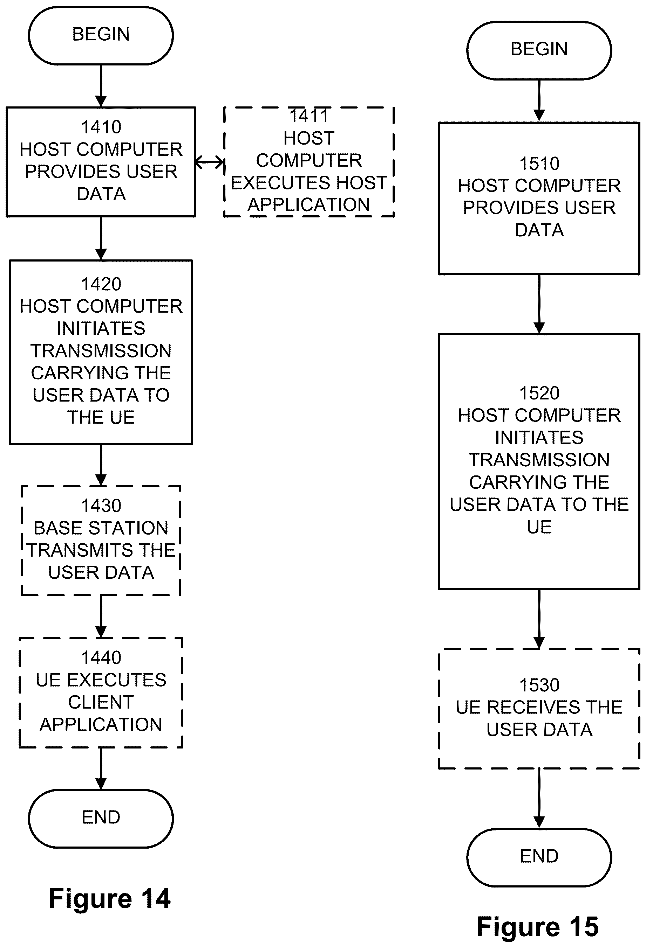

Figure 14 is a block diagram of methods implemented in a communication system including a host computer, a base station and a user equipment in accordance with some embodiments;

Figure 15 is a block diagram of methods implemented in a communication system including a host computer, a base station and a user equipment in accordance with some embodiments;

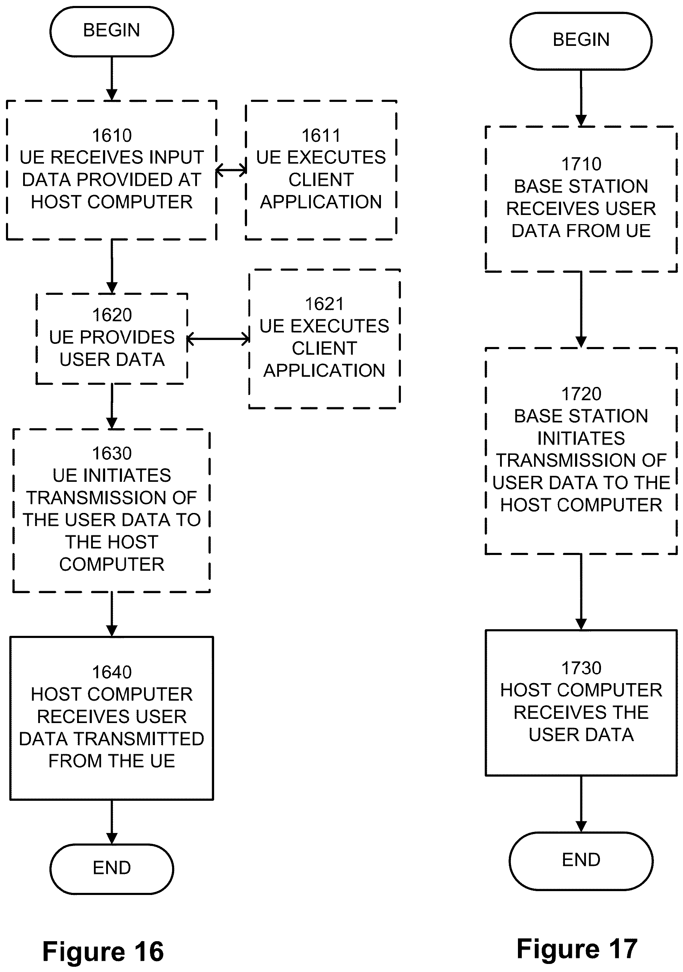

Figure 16 is a block diagram of methods implemented in a communication system including a host computer, a base station and a user equipment in accordance with some embodiments; and

Figure 17 is a block diagram of methods implemented in a communication system including a host computer, a base station and a user equipment in accordance with some embodiments.

DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

In the description that follows, the following assumptions may be applied.

- Multiplexing/overriding/etc. is performed similar to Rel. 15 as if high priority channels do not exist; this means that low priority operations, multiplexing/overriding/etc., are performed before cancellation.
- A UE cancels the transmission of a low priority channel including any intermediate scheduled low priority transmission that does not overlap with any low priority channel, if any DCI schedules an overlapping high priority transmission with the low priority channel, before performing multiplexing/overriding high priority channels if any.
- Multiplexing/overriding of high priority channels is performed as if low priority channels do not exist.
- A final high priority channel is prioritized if it overlaps with a final low priority channel, after performing multiplexing of high priority channels.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

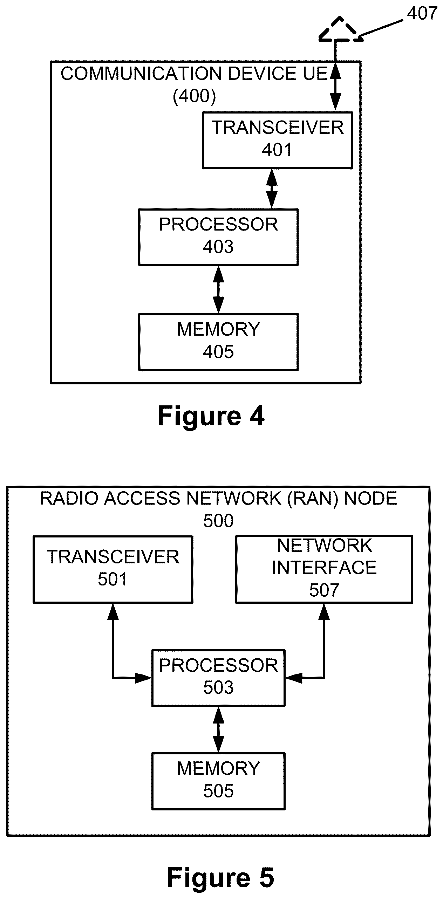

Figure 4 is a block diagram illustrating elements of a communication device 400 (also referred to as a mobile terminal, a mobile communication terminal, a wireless device, a wireless communication device, a wireless terminal, mobile device, a wireless communication terminal, user equipment, UE, a user equipment node/terminal/device, etc.) configured to provide wireless communication according to embodiments of inventive concepts. (Communication device 400 may be provided, for example, as discussed below with respect to wireless device 910 of Figure 9, UE 1000 of Figure 10, hardware 1130 or virtual machine 1140 of Figure 11, UE 1291, 1292 of Figure 12, and UE 1330 of Figure 13.) As shown, communication device UE may include an antenna 407 (e.g., corresponding to antenna 911 of Figure 9 or antenna 11225 of Figure 11), and transceiver circuitry 401 (also referred to as a transceiver, e.g., corresponding to interface 914 of Figure 9, transmitter 1033 and receiver 1035 of Figure 10, and radio interface 1337 of Figure 13) including a transmitter and a receiver configured to provide uplink and downlink radio communications with a base station(s) (e.g., corresponding to network node 960 of Figure 9, also referred to as a RAN node) of a radio access network. Communication device UE may also include processing circuitry 403 (also referred to as a processor, e.g., corresponding to processing circuitry 920 of Figure 9, processor 1001 of Figure 10, processing circuitry 1160 of Figure 11, and processing circuitry 1338 of Figure 13) coupled to the transceiver circuitry, and memory circuitry 405 (also referred to as memory, e.g., corresponding to device readable medium 930 of Figure 9, memory 1015 of Figure 10, and memory 1190-1 and non-transitory storage 1190-2 of Figure 11) coupled to the processing circuitry. The memory circuitry 405 may include computer readable program code that when executed by the processing circuitry 403 causes the processing circuitry to perform operations according to embodiments disclosed herein. According to other embodiments, processing circuitry 403 may be defined to include memory so that separate memory circuitry is not required. Communication device UE may also include an interface (such as a user interface) coupled with processing circuitry 403, and/or communication device UE may be incorporated in a vehicle.

As discussed herein, operations of communication device UE may be performed by processing circuitry 403 and/or transceiver circuitry 401. For example, processing circuitry 403 may control transceiver circuitry 401 to transmit communications through transceiver circuitry 401 over a radio interface to a radio access network node (also referred to as a base station) and/or to receive communications through transceiver circuitry 401 from a RAN node over a radio interface. Moreover, modules may be stored in memory circuitry 405, and these modules may provide instructions so that when instructions of a module are executed by processing circuitry 403, processing circuitry 403 performs respective operations (e.g., operations discussed below with respect to Example Embodiments relating to wireless communication devices). According to some embodiments, a communication device 400 and/or an element(s)/function(s) thereof may be embodied as a virtual node/nodes and/or a virtual machine/machines.

Figure 5 is a block diagram illustrating elements of a radio access network RAN node 500 (also referred to as a network node, base station, eNodeB/eNB, gNodeB/gNB, etc.) of a Radio Access Network (RAN) configured to provide cellular communication according to embodiments of inventive concepts. (RAN node 500 may be provided, for example, as discussed below with respect to network node 960 of Figure 9, hardware 1130, virtual machine 1140 of Figure 11, base stations 121A, 1212B, and 1212C of Figure 12, and base station 1320 of Figure 13.) As shown, the RAN node may include transceiver circuitry 501 (also referred to as a transceiver, e.g., corresponding to portions of interface 990 of Figure 9, receiver 11210 and transmitter 11220 of Figure 11, and radio interface 1327 of Figure 13) including a transmitter and a receiver configured to provide uplink and downlink radio communications with mobile terminals. The RAN node may include network interface circuitry 507 (also referred to as a network interface, e.g., corresponding to portions of interface 990 of Figure 9) configured to provide communications with other nodes (e.g., with other base stations) of the RAN and/or core network CN. The RAN node may also include processing circuitry 503 (also referred to as a processor, e.g., corresponding to processing circuitry 970, processing circuitry 1160 of Figure 11, and processing circuitry 1328 of Figure 13) coupled to the transceiver circuitry, and memory circuitry 505 (also referred to as memory, e.g., corresponding to device readable medium 980 of Figure 9, and memory 1190-1 and non transitory storage 1190-2 of Figure 11) coupled to the processing circuitry. The memory circuitry 505 may include computer readable program code that when executed by the processing circuitry 503 causes the processing circuitry to perform operations according to embodiments disclosed herein. According to other embodiments, processing circuitry 503 may be defined to include memory so that a separate memory circuitry is not required.

As discussed herein, operations of the RAN node may be performed by processing circuitry 503, network interface 507, and/or transceiver 501. For example, processing circuitry 503 may control transceiver 501 to transmit downlink communications through transceiver 501 over a radio interface to one or more mobile terminals UEs and/or to receive uplink communications through transceiver 501 from one or more mobile terminals UEs over a radio interface. Similarly, processing circuitry 503 may control network interface 507 to transmit communications through network interface 507 to one or more other network nodes and/or to receive communications through network interface from one or more other network nodes. Moreover, modules may be stored in memory 505, and these modules may provide instructions so that when instructions of a module are executed by processing circuitry 503, processing circuitry 503 performs respective operations (e.g., operations discussed below with respect to Example Embodiments relating to RAN nodes). According to some embodiments, RAN node 500 and/or an element(s)/function(s) thereof may be embodied as a virtual node/nodes and/or a virtual machine/machines.

According to some other embodiments, a network node may be implemented as a core network CN node without a transceiver. In such embodiments, transmission to a wireless communication device UE may be initiated by the network node so that transmission to the wireless communication device UE is provided through a network node including a transceiver (e.g., through a base station or RAN node). According to embodiments where the network node is a RAN node including a transceiver, initiating transmission may include transmitting through the transceiver.

Figure 6 is a block diagram illustrating elements of a core network CN node (e.g., an SMF node, an AMF node, etc.) of a communication network configured to provide cellular communication according to embodiments of inventive concepts. As shown, the CN node may include network interface circuitry 607 (also referred to as a network interface) configured to provide communications with other nodes of the core network and/or the radio access network RAN. The CN node may also include a processing circuitry 603 (also referred to as a processor) coupled to the network interface circuitry, and memory circuitry 605 (also referred to as memory) coupled to the processing circuitry. The memory circuitry 605 may include computer readable program code that when executed by the processing circuitry 603 causes the processing circuitry to perform operations according to embodiments disclosed herein. According to other embodiments, processing circuitry 603 may be defined to include memory so that a separate memory circuitry is not required.

As discussed herein, operations of the CN node may be performed by processing circuitry 603 and/or network interface circuitry 607. For example, processing circuitry 603 may control network interface circuitry 607 to transmit communications through network interface circuitry 607 to one or more other network nodes and/or to receive communications through network interface circuitry from one or more other network nodes. Moreover, modules may be stored in memory 605, and these modules may provide instructions so that when instructions of a module are executed by processing circuitry 603, processing circuitry 603 performs respective operations (e.g., operations discussed below with respect to Example Embodiments relating to core network nodes). According to some embodiments, CN node 600 and/or an element(s)/function(s) thereof may be embodied as a virtual node/nodes and/or a virtual machine/machines.

As previously indicated, the current rules for handling UCI with different priorities do not ensure that low priority UCI survives. There are also issues with handling overlapping UCI when some UCI are on sub-slot level and some UCI are on slot-level.

Advantages that may be achieved using some of the embodiments of inventive concepts herein is that channels including UCI of low priority index will not cancelled when time-overlapping with one or more channels with high priority channels. Instead, UCI of low-priority is multiplexed on high-priority channels.

In Rel-16, physical layer priority is referred "priority index". Herein, a high-priority (or low-priority) channel has the meaning that priority index in high (or low), e.g. 1 (or 0), and priority of a channel refers to the priority index of said channel. Further, a channel that carries high-priority (or low-priority) data is understood as a channel with high (or low) priority index.

In the embodiments below, when two channels below are said to collide or overlap, this can mean that they overlap in time.

In one embodiment of inventive concepts and, the multiplexing procedure is performed in a step-wise manner as follows:

    1. Run the multiplexing procedure for all low priority channels without considering the presence of high priority channels. This results in a set of non-overlapping low priority channels.

    2. Run the multiplexing procedure for all high priority channels without considering the presence of low priority channels. This results in a set of non-overlapping high priority channels.

    3. While there exists overlap between low priority and high priority channels:

        a. For each set of channels that overlap, resolve this overlap. This may result in a channel carrying both high and low priority information.

In some embodiments of inventive concepts, in resolving the overlap between low and high priority channels, any low-priority CSI (channel state information) or SR (scheduling request) is dropped

In other embodiments of inventive concepts, when resolving the overlap between high and low priority channels, any low-priority data is dropped if it collides with a channel carrying high priority data.

In yet other embodiments of inventive concepts, when resolving the overlap between low and high priority channels, any low-priority CSI or SR is dropped if it is multiplexed onto a channel that does not carry low priority data.

In various other embodiments of inventive concepts, step 3a) is performed per sub-slot, i.e. only a subset of the high priority channels contained in the sub-slot under consideration is considered.

In further embodiments of inventive concepts, when resolving step 3a), resolving the overlap between a low priority channel that overlaps with more than one high priority channel consists of resolving the overlap between the low priority channel and a subset of the overlapping high priority channels.

In these further embodiments of inventive concepts, the channels in the subset of the overlapping high priority channels are all contained in the same sub-slot. For example, the subset of the overlapping high priority channels may consist of a single high priority channel.

The single high priority channel can be any of:

- the overlapping high priority channel that starts the earliest. Ties may be broken based on length of transmission or total number of REs available for the channel.
- the overlapping high priority channel that has the longest length. Ties may be broken based on starting symbol of the channel.

In yet various other embodiments of inventive concepts, when resolving overlaps in step 3a), the resolution might create new channels. These new channels would then require new applications of step 3a) until no further overlap is present.

In some other embodiments of inventive concepts, if a high priority PUSCH or PUCCH overlaps with a low priority PUCCH that contains HARQ-feedback and other low priority UCI, the low priority HARQ-feedback is multiplexed onto the PUSCH or PUCCH and not the other low priority UCI. In some versions of this embodiment, this is done in step 3a).

In other embodiments of inventive concepts, if a low priority PUSCH overlaps with a high priority PUCCH that contains HARQ-feedback and other high priority UCI, the high priority HARQ-feedback is multiplexed onto the PUSCH or PUCCH and not the other high priority UCI. In some versions of these embodiments, this is done in step 3a).

In additional embodiments of inventive concepts, if a high priority PUCCH carrying UCI overlaps with a low priority PUSCH, the UCI from the high priority PUCCH is multiplexed onto the low priority PUSCH. In some versions of this embodiment, only high priority HARQ-feedback is multiplexed onto the low priority PUSCH. In some versions, the high priority UCI is punctured into the low priority PUSCH. In some versions, this puncturing avoids REs used by low priority UCI. In some versions, this puncturing is made onto REs contained in the same sub-slot as the original high priority PUCCH. In some versions, this puncturing is made onto REs that do not precede the first symbol of the high priority PUCCH.

In yet other additional embodiments of inventive concepts, collisions between overlapping PUSCH are resolved before resolving collisions of other channels. This resolution procedure can include dropping low priority PUSCH that collide with high priority PUSCH. This resolution procedure can include dropping PUSCH scheduled by configured grant that collide with PUSCH scheduled by DCI. This resolution procedure can include dropping PUSCH for which there is no data to transmit (e.g. if there is no data in the logical channel buffers for logical channels that can be mapped to the PUSCH) that collide with PUSCH for which there is data to transmit.

After resolving collisions between overlapping PUSCHs, any of the other embodiments using a step-wise procedure can be used to resolve additional overlap. In some embodiments, if the group of overlapping channels with different priority obey the multiplexing timeline conditions, the UE runs the multiplexing procedure for both priorities to determine non-overlapping PUCCHs. Otherwise, the UE runs the multiplexing procedure per priority.

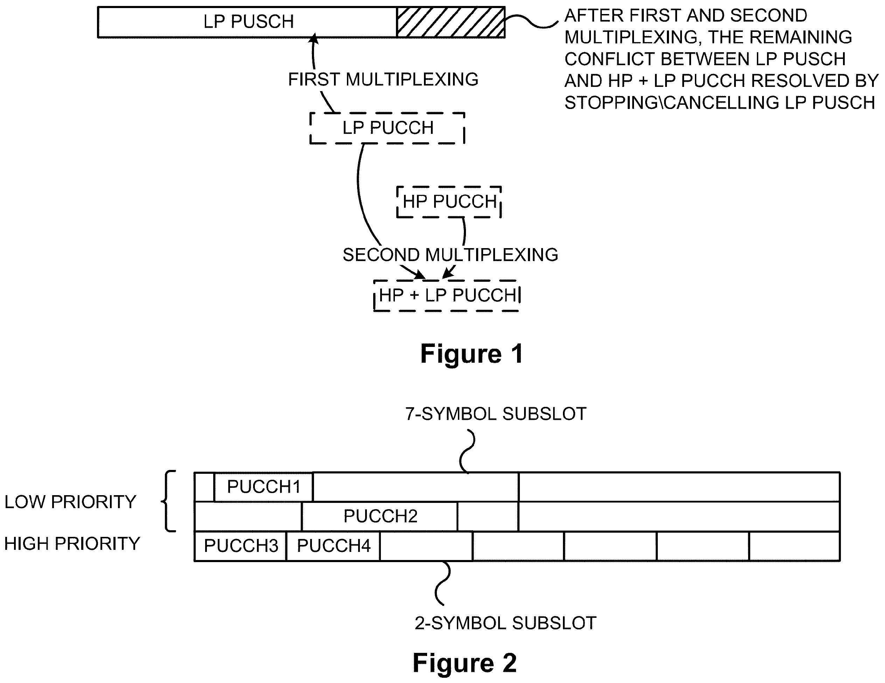

In further embodiments of inventive concepts, if the group of overlapping channels with different priority that does not obey the multiplexing timeline conditions contains low-priority PUSCH(s) and the sub-group of overlapping channels (including high- and low-priority channels) excluding said low-priority PUSCH(s) do obey the multiplexing timeline conditions, the UE runs the multiplexing procedure for sub-group of channels and resolves remaining overlap by prioritization/cancelling procedure. In some such embodiments the UE runs multiplexing procedure for a first sub-group of high- and low-priority channels that meets multiplexing timeline conditions and then runs multiplexing procedure for a second sub-group of high- and low-priority channels that meets multiplexing timeline wherein the group of channels in the intersection between first and second sub-group is non-empty but only contains PUCCHs. In such embodiments, the UE thus multiplexes one or more PUCCHs on two or more channel that may overlap. Thus, the UE stores/remembers the content and location of PUCCHs even after overlap for first sub-group has been resolved until after the overlap for second (or later) sub-group has been resolved. Figure 1 illustrates an example scenario for such embodiments.

Figure 1 illustrates a scenario where a LP (Low-Priority) PUCCH is included in intersection of two sub-groups of overlapping channels where the LP PUCCH is multiplexed in a first multiplexing (of first sub-group) onto a LP PUSCH and then multiplexed in a second multiplexing (of second sub-group) with a HP (High-Priority) PUCCH onto a HP+LP PUCCH. After the first and second multiplexing, any remaining conflict between LP PUSCH and HP+LP PUCCH is resolved by stopping/cancelling any LP PUSCH.

In various other embodiments of inventive concepts, multiplexing of different priorities is enabled by an RRC parameter, e.g. *differentPrioritiesMultiplexing-rX*.

As an example, multiplexing of different priorities can be enabled depending on type multiplexing, e.g. PUSCH + UCI or UCI + UCI. For example, one or more out of following types of multiplexing can be configured

- highPriorityUciOnLowPriorityPuschEnabled: High-priority UCI will be multiplexed on low-priority PUSCH while low-priority UCI would not be multiplexed on high-priority PUSCH,
- lowPriorityUciOnHighPriorityPuschEnabled: Low-priority UCI will be multiplexed on high-priority PUSCH while low-priority UCI would not be multiplexed on high-priority PUSCH
- lowPriorityHarqAckOnHighPriorityPucch: Only low-priority HARQ-ACK will be multiplexed on high-priority PUCCH, i.e. low-priority SR and/or CSI would not be multiplexed with high-priority UCI
- lowPriorityHarqAckSrOnHighPriorityPucch: Only low-priority HARQ-ACK and/or SR will be multiplexed on high-priority PUCCH, i.e. low-priority CSI would not be multiplexed with high-priority UCI
- etc

In some embodiments of inventive concepts, whether "priority multiplexing" or Rel-16 prioritization/canceling shall be performed by UE is dynamically indicated in DCI by new or present fields. For example, the DL DCI comprises a field indicating if corresponding HARQ-ACK is allowed to be multiplexed on a PUSCH or with UCI of different priority. In another example, the UL DCI comprises a field indicating if UCI of different priority than the corresponding PUSCH. In yet another example, "priority multiplexing" can be indicated via indicated PUCCH resource indicator where e.g. a PUCCH resource may be configured to allow "priority multiplexing" or not.

Multiplexing timeline conditions when sub-slot configuration is different
In this embodiment, high-priority PUCCHs is configured with a different sub-slot configuration than low-priority PUCCH. In Rel-16, since different priorities cannot be multiplexed, the timeline conditions are only conditions for same priority. Here where different priorities can be multiplexed, the timeline conditions multiplexing need to be modified.

The timeline conditions are modified stating that multiplexing timeline conditions shall be fulfilled for each sub-group of channels that starts in a subslot, where the subslot resolution is determined by the shortest subslot among the overlapping group of channels. With this enhanced condition, there may be a channel outside a sub-group such that multiplexing timeline conditions are not fulfilled for the group including the channel and the sub-group. This may be considered an error case by the UE if only if the priority of said channel is the same as the priority for all channels within the sub-group. Unless it is an error case, the UE resolves overlap by stopping/canceling low-priority channel(s).

Figure 2 illustrates a scenario where two overlapping low-priority PUCCHs (PUCCH1 and PUCCH2) meet multiplexing timeline conditions and two high-priority PUCCHs (PUCCH3 and PUCCH4) that also meet multiplexing timeline conditions, while the multiplexing timeline conditions among all the overlapping PUCCHs (PUCCH1 to PUCCH4) do not fulfill multiplexing timeline conditions since PUCCH4 cannot be transmitted earlier than in second 2-symbol subslot. However, PUCCH1 and PUCCH3 that starts in first 2-symbol subslot fulfill multiplexing timeline and PUCCH2 and PUCCH4 that starts in second 2-symbol subslot also fulfill multiplexing timeline.

The group of overlapping channels is {PUCCH1, ..., PUCCH4}, while sub-groups of overlapping channels are {PUCCH1, PUCCH3} and {PUCCH2, PUCCH4}.

PUCCH multiplexing procedure when sub-slot configuration is different
When sub-slot configuration is different the procedure for determining PUCCHs for groups of overlapping PUCCHs need to be modified when multiplexing timeline conditions group of overlapping channels that start in a sub-slot fulfills the multiplexing timeline conditions, i.e. according to the inventive concepts illustrated in Figure 2, while the group of overlapping channels that start within the slot does not fulfill the multiplexing timeline conditions.

In this embodiment, the pseudo-code procedure is modified with parts that are underlined such that a single PUCCH is determined for sub-groups of overlapping channels that fulfill multiplexing timeline conditions according to the embodiment illustrated in Figure 2. The procedure runs over the whole slot according to Rel-15 unless a sub-slot resource, say confined in sub-slot $r$, is found and the resource is in the group of overlapping channels, then the enhanced procedure resolves the overlap for the sub-group of overlapping channels that start before the end of sub-slot $r$ before the procedure continues to resolve remaining overlap that occurs in symbols beyond sub-slot r. If no sub-slot resource is found the procedure runs according Rel-15.

A (PUCCH) resource is a sub-slot resource if said resource is associated with a PUCCH-Config (see 38.331, Section 6.3.2) configured with subslotLengthForPUCCH-r16.

```
Set 𝒞(Q) to the cardinality of Q
Set Q(j,0) to be the first symbol of resource Q(j) in the slot
Set L(Q(j)) to be the number of symbols of resource Q(j) in the slot
Set j = 0 - index of first resource in set Q
Set o = 0 - counter of overlapped resources
Set k = last symbol of slot
```

while $j \leq \mathcal{C}(Q)-1$

    if (resource Q(j-o) is sub-slot and k is not less than the last symbol for the sub-slot for Q(j-o))

        <u>Set k to last symbol for the sub-slot for resource Q(j-o)</u>

    <u>end if</u>

    if $j < \mathcal{C}(Q)-1$ and resource $Q(j-o)$ overlaps with resource $Q(j+1)$ <u>and Q(j+1) does not start after k</u>

        <u>if (resource Q(j+1) is sub-slot and k is larger than last symbol for sub-slot for Q(j+1))</u>

            <u>Set k to last symbol for the sub-slot for resource j +1</u>

        end if

        $o = o+1$

        $j = j+1$

    else

        if $o > 0$

            determine a single resource for multiplexing UCI associated with resources $\{Q(j-o),Q(j-o+1),...,Q(j)\}$ as described in Clauses 9.2.5.0, 9.2.5.1 and 9.2.5.2

            set the index of the single resource to $j$

            $Q = Q \setminus \{Q(j-o),Q(j-o+1),...,Q(j-1)\}$

            $j=0$ % start from the beginning after reordering unmerged resources at next step

            $o = 0$

            order$(Q)$ % function that re-orders resources in current set $Q$

            Set $\mathcal{C}(Q)$ to the cardinality of $Q$

            <u>k = last symbol of slot</u>

        else

            $j = j+1$

        end if

    end if

end while

In one example of this embodiment, the determined single resource for multiplexing UCI associated with resources {Q(j - o),Q(j - o + 1),...,Q(j)} is a resource that is confined within the sub-slot that is shortest among the sub-slots that $Q(j - o)$, $Q(j - o + 1)$, ..., $Q(j)$ are confined within.

If the above procedure is run for the scenario illustrated in Figure 1, one resource confined within first 2-symbol sub-slot would be determined for {PUCCH1, PUCCH3} and another resource confined within second 2-symbol sub-slot would be determined for {PUCCH2, PUCCH4}.

In another example scenario where PUCCH3 would not be present, one resource confined within second 2-symbol sub-slot would be determined for {PUCCH1, PUCCH2, PUCCH4}.

In another example of this embodiment, the determined single resource for multiplexing UCI associated with resources $Q(j - o)$, $Q(j - o + 1)$, ... , $Q(j)$ is a resource that does not start before the sub-slot that is shortest among the sub-slots the $Q(j - o)$, $Q(j - o + 1)$, ..., $Q(j)$ are confined within. In such another example the determined resource may still be conflicting with later PUCCHs that is resolved in a later step. For example, with the scenario in Figure 1, the first resolution occurs for {PUCCH1, PUCCH3} where a determined resource, say PUCCH5, may end in second 2-symbol sub-slot. The set Q would be added PUCCH5 are reordered and the procedure would re-started with Q consisting of {PUCCH5, PUCCH2, PUCCH4} wherein PUCCH5 would be a 7-symbol sub-slot resource (since it is not confined with first 2-symbol sub-slot). The next resolution occurs for {PUCCH5, PUCCH2, PUCCH4} where the determined resource would start in second 2-symbol sub-slot while end symbol may or may not be ending in second 2-symbol sub-slot.

In yet another example of this embodiment, the determined single resource for multiplexing UCI associated with resources $Q(j - o)$, $Q(j - o + 1)$, ..., $Q(j)$ is a resource that does not start before nor ends after the sub-slot if the resource confined within said sub-slot among $Q(j - o)$, $Q(j - o + 1)$, ..., $Q(j)$ is associated with high priority.

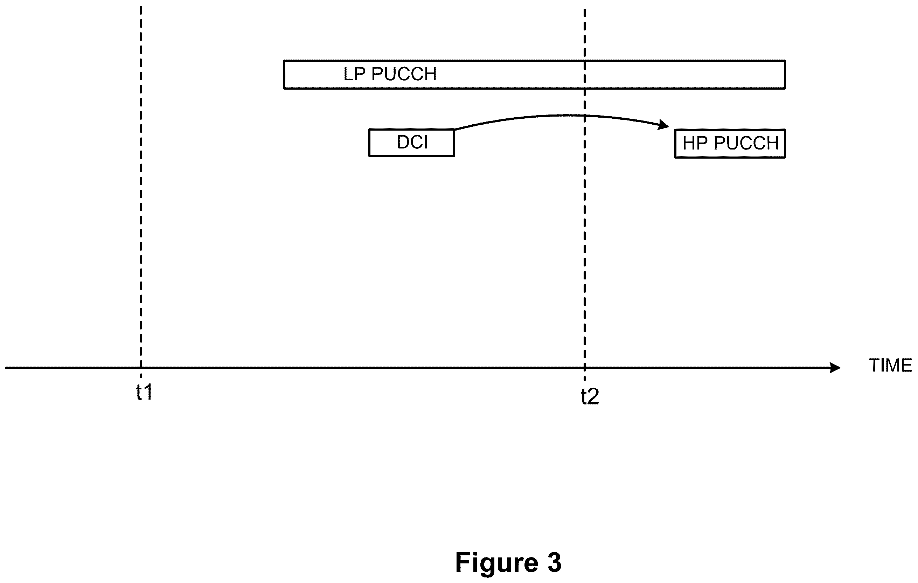

In some embodiments of inventive concepts, the set Q only comprises only those resources that can be multiplexed with resources with a later starting point. For example, if the UCI in a first PUCCH that starts in the beginning of the slot and this first PUCCH has already started to be processed for transmission when a DCI triggering a second PUCCH that starts in the end of the slot and the UE has no capability to remember the contents of UCI in first PUCCH, then the Q may not comprise the resource for first PUCCH when the procedure is run to resolve overlap in a later part of the slot. Procedure-wise this means that determined and resolved resources are not included in Q when UCI comprised in those resources can no longer be multiplexed with later starting resources. For example, Figure 3 illustrates such a scenario where there is time t1 for which the procedure need to be run for early starting channels and beyond this time Q will no longer comprise those channels. Thus, t1 is considered the last time to run a multiplexing procedure for channels starting early in the slot and Q does not include LP PUCCH if the multiplexing procedure starts after *t*1. Similarly, t2 is the last time to run the multiplexing procedure for channels starting late in a slot and Q includes HP PUCCH but not LP PUCCH if the multiplexing procedure starts before t2 but after t1

In some such embodiments, the UE has only the capability that only channels that starts in same sub-slot can be multiplexed, where the sub-slot has a smallest sub-slot unit (2-symbol, 7-symbol, or potentially future x-symbol sub-slot) among the overlapping channels. In such embodiments, once overlapping has been resolved in a (smallest-unit) sub-slot, the determined non-overlapping (within the sub-group) can be removed from Q. Potentially remaining overlap after the procedure has been completed for whole slot will be between channels of different priorities that will be resolved by Rel-16 cancelling/stopping procedure of low-priority channels.

In another example, when there is overlapping between PUCCH and/or PUSCH resources in a slot, the Rel-15 procedures for overlapping resolution is performed with one or combination of the following modifications: In step 1, for resolving overlapping between PUCCH resources, when *a single PUCCH resource* is to be determined for a set of mutually overlapping PUCCH resources:

- If one of the PUCCH resources in the set is a PUCCH for HARQ-ACK associated to a sub-slot, the single PUCCH resource is determined using the sub-slot PUCCH resource sets and total UCI of the set and corresponding procedures. If there are two PUCCH resources corresponding to two different sub-slots, the procedure for determining the single PUCCH resource is done for the earlier sub-slot first based on the resources associated to the earlier sub-slot.

  - In one example the CSI and SR of low priority can be dropped from the total UCI in the set when determining a single PUCCH resource,

- In step 2, for resolving overlapping between non-overlapping PUCCHs and PUSCH:

  ○ In case of overlapping between PUCCH with high priority SR and a low priority PUSCH, low priority PUSCH is dropped.
  ○ In case of overlapping between PUCCH carrying UCI without high priority SR and PUSCH, UCI is multiplexed on PUSCH

Operations of the communication device 400 (implemented using the structure of the block diagram of Figure 4) will now be discussed with reference to the flow chart of Figure 7 according to some embodiments of inventive concepts. For example, modules may be stored in memory 405 of Figure 4, and these modules may provide instructions so that when the instructions of a module are executed by respective communication device processing circuitry 403, processing circuitry 403 performs respective operations of the flow chart.

Turning to Figure 7, in block 701, the processing circuitry 403 runs a multiplexing procedure for all channels designated as low priority channels without considering presence of channels designate as high priority channels to create a set of non-overlapping low priority channels. In block 703, the processing circuitry 403 runs the multiplexing procedure for all high priority channels without considering presence of low priority channels to create a set of non-overlapping high priority channels.

In block 703, the processing circuitry 403, responsive to there being an overlap between a non-overlapping low priority channel and a non-overlapping high priority channel, resolves the overlap.

In some embodiments of inventive concepts, the processing circuitry 403 resolves the overlap by implementing a channel carrying both high priority information and low priority information. In other embodiments of inventive concepts, resolving the overlap includes resolving the overlap per sub-slot of a channel.

In further embodiments of inventive concepts, resolving the overlap includes dropping low priority channel state information, CSI, and low priority scheduling requests. Resolving the overlap in some other embodiments, the processing circuitry 403 drops low-priority data responsive to the low-priority data colliding with a channel carrying high priority data.

The processing circuitry 403, responsive to a low priority channel overlapping with more than one high priority channel, resolves the overlap by resolving the overlap between the low priority channel and a subset of the more than one high priority channel. In some embodiments of inventive concepts, the subset of the more than one high priority channel comprises a single high priority channel and in resolving the overlap, the processing circuitry 403 resolves the overlap between the low priority channel and the single high priority channel. The single high priority channel may be any one of an overlapping high priority channel that starts the earliest and an overlapping high priority channel that has a longest length.

In resolving the overlap, the processing circuitry 403 may create a new channel and resolve any overlaps in the new channel in some embodiments of inventive concepts.

In other embodiments of inventive concepts, the processing circuitry 403, responsive to a high priority physical uplink shared channel, PUSCH, or a high priority physical uplink control channel, PUCCH, overlapping with a low priority PUCCH that contains hybrid automatic repeat request, HARQ,-feedback and other low priority uplink control information, UCI, resolves the overlap by multiplexing the low priority HARQ-feedback onto the high priority PUSCH or the high priority PUCCH and not the other low priority UCI.

In further embodiments of inventive concepts, the processing circuitry 403, responsive to a high priority physical uplink control channel, PUCCH, carrying high priority uplink control information, UCI, overlaps with a low priority physical uplink shared channel, PUSCH, resolves the overlap by multiplexing the high priority UCI from the high priority PUCCH onto the low priority PUSCH. In some embodiments, in multiplexing the high priority UCI from the high priority PUCCH onto the low priority PUSCH, the processing circuitry 403 punctures the high priority UCI into the low priority PUSCH.

In various other embodiments of inventive concepts, the processing circuitry 403, responsive to a low priority physical uplink shared channel, PUSCH overlaps with a high priority physical uplink control channel, PUCCH, that contains hybrid automatic repeat request, HARQ, -feedback and other high priority uplink control information, UCI, resolves the overlap by multiplexing the high priority HARQ-feedback onto the low priority PUSCH or the high priority PUCCH and not the other high priority UCI.

In some embodiments of inventive concepts, the processing circuitry 403 resolves collisions between overlapping physical uplink shared channels, PUSCHs, before resolving other overlapping channels. In some of these embodiments, the processing circuitry 403 resolves collisions between overlapping PUSCH by dropping low priority PUSCH that collide with high priority PUSCH. In some other of these embodiments, the processing circuitry 403 resolves collisions between overlapping PUSCH by dropping PUSCH scheduled by configured grant that collide with PUSCH scheduled by downlink control information, DCI. In yet other embodiments of these embodiments, the processing circuitry 403 resolves collisions between overlapping PUSCH by dropping PUSCH for which there is no data to transmit that collide with PUSCH for which there is data to transmit.

In various other embodiments of inventive concepts, the processing circuitry 402 resolves the overlap based on at least one radio resource control, RRC, parameter. The at least one RRC parameter comprises one or more of:

- a highPriorityUciOnLowPriorityPuschEnabled parameter which when enabled, resolving the overlap includes multiplexing High-priority uplink control information, UCI, on low-priority physical uplink shared channel, PUSCH, while low-priority UCI would not be multiplexed on high-priority PUSCH;
- a lowPriorityUciOnHighPriorityPuschEnabled parameter which when enabled, resolving the overlap includes multiplexing low-priority UCI on high-priority PUSCH while low-priority UCI would not be multiplexed on high-priority PUSCH;
- a lowPriorityHarqAckOnHighPriorityPucch parameter which when enabled, resolving the overlap includes multiplexing only low-priority hybrid automatic repeat request - acknowledge, HARQ-ACK, on high-priority physical uplink control channel, PUCCH; and

- a lowPriorityHarqAckSrOnHighPriorityPucch: parameter which when enabled, resolving the overlap includes multiplexing only low-priority HARQ-ACK and/or scheduling request, SR, on high-priority PUCCH.

In further embodiments of inventive concepts, responsive to there being overlapping between physical uplink control channel, PUCCH, with high priority scheduling request, SR, and a low priority physical uplink shared channel, PUSCH, the processing circuitry 403 resolves the overlap by dropping the low priority PUSCH.

In yet other embodiments of inventive concepts, the processing circuitry 403, responsive to there being overlapping between physical uplink control channel, PUCCH, carrying UCI without high priority scheduling request, SR, and a physical uplink shared channel, PUSCH, resolves the overlap by multiplexing the UCI on PUSCH.

In additional embodiments of inventive concepts, at least one of running the multiplexing procedure for all channels designated as low priority channels and running the multiplexing procedure for all channels designated as high priority channels includes running the multiplexing procedure based on whether priority multiplexing or prioritization/-cancelling is designated in downlink control information, DCI. The DCI may be dynamically indicated.

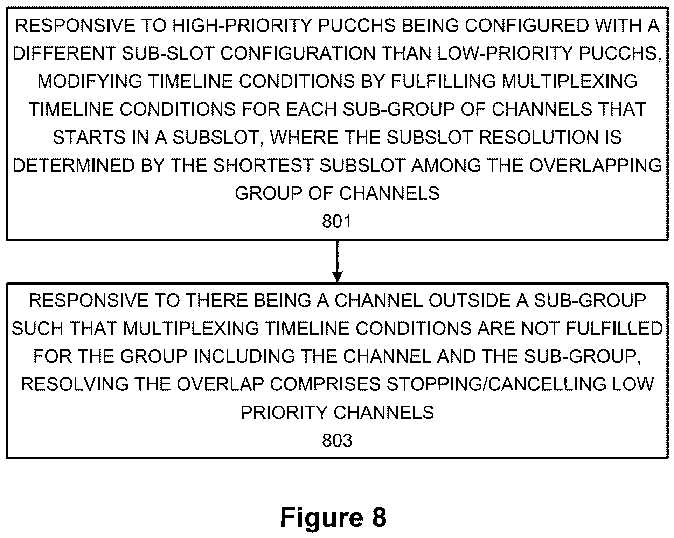

Turning to Figure 8, there may be situations where high-priority PUCCHs are configured with a different sub-slot configuration than low-priority PUCCH. Thus, in block 801, the processing circuitry 403 responsive to high-priority physical uplink control channels PUCCHs being configured with a different sub-slot configuration than low-priority PUCCHs, modifies timeline conditions by fulfilling multiplexing timeline conditions for each sub-group of channels that starts in a subslot, wherein the subslot resolution is determined by the shortest subslot among the overlapping group of channels. In block 803, the processing circuitry 403, responsive to there being a channel outside a sub-group such that multiplexing timeline conditions are not fulfilled for the group including the channel and the sub-group, resolves the overlap by stopping/cancelling low priority channels.

Various embodiments of inventive concepts have been described that resolve overlapping of channels. The resolving of overlap includes multiplexing channels of different priority index.

Example embodiments are discussed below.

Embodiment 1. A method performed by a communication device (400), the method comprising:

running (701) a multiplexing procedure for all channels designated as low priority channels without considering presence of channels designate as high priority channels to create a set of non-overlapping low priority channels;
running (703) the multiplexing procedure for all high priority channels without considering presence of low priority channels to create a set of non-overlapping high priority channels; and
responsive to there being an overlap between a non-overlapping low priority channel and a non-overlapping high priority channel, resolving (705) the overlap.

Embodiment 2. The method of Embodiment 1 wherein resolving the overlap comprises implementing a channel carrying both high priority information and low priority information.

Embodiment 3. The method of any of Embodiments 1-2, wherein resolving the overlap comprises resolving the overlap per sub-slot of a channel.

Embodiment 4. The method of any of Embodiments 1-3, wherein resolving the overlap comprises dropping low priority channel state information, CSI, and low priority scheduling requests.

Embodiment 5. The method of any of Embodiments 1-4, wherein resolving the overlap further comprises dropping low-priority data responsive to the low-priority data colliding with a channel carrying high priority data.

Embodiment 6. The method of any of Embodiments 1-4, wherein responsive to a low priority channel overlapping with more than one high priority channel, resolving the overlap comprises resolving the overlap between the low priority channel and a subset of the more than one high priority channel.

Embodiment 7. The method of Embodiment 6 wherein the subset of the more than one high priority channel comprises a single high priority channel and resolving the overlap comprises resolving the overlap between the low priority channel and the single high priority channel.

Embodiment 8. The method of Embodiment 7 wherein the single high priority channel comprises any one of an overlapping high priority channel that starts the earliest and an overlapping high priority channel that has a longest length.

Embodiment 9. The method of any of Embodiments 1-8, wherein resolving the overlap includes creating a new channel and resolving the overlap comprises resolving any overlaps in the new channel.

Embodiment 10. The method of any of Embodiments 1-9, wherein responsive to a high priority physical uplink shared channel, PUSCH, or a high priority physical uplink control channel, PUCCH, overlapping with a low priority PUCCH that contains hybrid automatic repeat request, HARQ,-feedback and other low priority uplink control information, UCI, resolving the overlap comprises multiplexing the low priority HARQ-feedback onto the high priority PUSCH or the high priority PUCCH and not the other low priority UCI.

Embodiment 11. The method of any of Embodiments 1-10, wherein responsive to a high priority physical uplink control channel, PUCCH, carrying high priority uplink control information, UCI, overlaps with a low priority physical uplink shared channel, PUSCH, resolving the overlap comprises multiplexing the high priority UCI from the high priority PUCCH onto the low priority PUSCH.

Embodiment 12. The method of Embodiment 11 wherein multiplexing the high priority UCI from the high priority PUCCH onto the low priority PUSCH comprises puncturing the high priority UCI into the low priority PUSCH.

Embodiment 13. The method of any of Embodiments 1-11 wherein responsive to a low priority physical uplink shared channel, PUSCH overlaps with a high priority physical uplink control channel, PUCCH, that contains hybrid automatic repeat request, HARQ, -feedback and other high priority uplink control information, UCI, resolving the overlap comprises multiplexing the high priority HARQ-feedback onto the low priority PUSCH or the high priority PUCCH and not the other high priority UCI.

Embodiment 14. The method of Embodiment 1-13 wherein resolving the overlap comprises resolving collisions between overlapping physical uplink shared channel, PUSCH, before resolving other overlapping channels.

Embodiment 15. The method of Embodiment 14 wherein resolving collisions between overlapping PUSCH comprises dropping low priority PUSCH that collide with high priority PUSCH.

Embodiment 16. The method of Embodiment 14 wherein resolving collisions between overlapping PUSCH comprises dropping PUSCH scheduled by configured grant that collide with PUSCH scheduled by downlink control information, DCI.

Embodiment 17. The method of Embodiment 14 wherein resolving collisions between overlapping PUSCH comprises dropping PUSCH for which there is no data to transmit that collide with PUSCH for which there is data to transmit.

Embodiment 18. The method of any of Embodiments 1-17 wherein resolving the overlap comprises resolving the overlap based on at least one radio resource control, RRC, parameter.

Embodiment 19. The method of Embodiment 18 wherein the at least one RRC parameter comprises one or more of:

a highPriorityUciOnLowPriorityPuschEnabled parameter which when enabled, resolving the overlap includes multiplexing High-priority uplink control information, UCI, on low-priority physical uplink shared channel, PUSCH, while low-priority UCI would not be multiplexed on high-priority PUSCH;
a lowPriorityUciOnHighPriorityPuschEnabled parameter which when enabled, resolving the overlap includes multiplexing low-priority UCI on high-priority PUSCH while low-priority UCI would not be multiplexed on high-priority PUSCH;
a lowPriorityHarqAckOnHighPriorityPucch parameter which when enabled, resolving the overlap includes multiplexing only low-priority hybrid automatic repeat request - acknowledge, HARQ-ACK, on high-priority physical uplink control channel, PUCCH; and
a lowPriorityHarqAckSrOnHighPriorityPucch: parameter which when enabled, resolving the overlap includes multiplexing only low-priority HARQ-ACK and/or scheduling request, SR, on high-priority PUCCH.

Embodiment 20. The method of any of Embodiments 1-19, wherein at least one of running the multiplexing procedure for all channels designated as low priority channels and running the multiplexing procedure for all channels designated as high priority channels comprises running the multiplexing procedure based on whether priority multiplexing or prioritization/cancelling is designated in downlink control information, DCI.

Embodiment 21. The method of Embodiment 20 wherein the DCI is dynamically indicated.

Embodiment 22. The method of any of Embodiments 1-21, wherein responsive to there being overlapping between physical uplink control channel, PUCCH, with high priority scheduling request, SR, and a low priority physical uplink shared channel, PUSCH, resolving the overlap comprises dropping the low priority PUSCH.

Embodiment 23. The method of any of Embodiments 1-22, wherein responsive to there being overlapping between physical uplink control channel, PUCCH, carrying UCI without high priority scheduling request, SR, and a physical uplink shared channel, PUSCH, resolving the overlap comprises multiplexing the UCI on PUSCH.

Embodiment 24. The method of any of Embodiments 1-23, further comprising:

responsive to high-priority physical uplink control channels PUCCHs being configured with a different sub-slot configuration than low-priority PUCCHs, modifying (801) timeline conditions by fulfilling multiplexing timeline conditions for each sub-group of channels that starts in a subslot, wherein the subslot resolution is determined by the shortest subslot among the overlapping group of channels; and
responsive to there being a channel outside a sub-group such that multiplexing timeline conditions are not fulfilled for the group including the channel and the sub-group, resolving (803) the overlap comprises stopping/cancelling low priority channels.

Embodiment 25. A communication device (400) comprising:

processing circuitry (403); and
memory (405) coupled with the processing circuitry, wherein the memory includes instructions that when executed by the processing circuitry causes the communication device to perform operations comprising:

running (701) a multiplexing procedure for all channels designated as low priority channels without considering presence of channels designate as high priority channels to create a set of non-overlapping low priority channels;
running (703) the multiplexing procedure for all high priority channels without considering presence of low priority channels to create a set of non-overlapping high priority channels; and
responsive to there being an overlap between a non-overlapping low priority channel and a non-overlapping high priority channel, resolving (705) the overlap.

Embodiment 26. The communication device (400) of Embodiment 1 wherein in resolving the overlap, wherein the memory includes instructions that when executed by the processing circuitry causes the communication device to perform operations comprising implementing a channel carrying both high priority information and low priority information.

Embodiment 27. The communication device (400) of any of Embodiments 25-26, wherein in resolving the overlap, wherein the memory includes instructions that when executed by the processing circuitry causes the communication device to perform operations comprising resolving the overlap per sub-slot of a channel.

Embodiment 28. The communication device (400) of any of Embodiments 25-27, wherein in resolving the overlap, the memory includes instructions that when executed by the processing circuitry causes the communication device to perform operations comprising dropping low priority channel state information, CSI, and low priority scheduling requests.

Embodiment 29. The communication device (400) of any of Embodiments 25-28, wherein in resolving the overlap, the memory includes further instructions that when executed by the processing circuitry causes the communication device to perform operations further comprising dropping low-priority data responsive to the low-priority data colliding with a channel carrying high priority data.

Embodiment 30. The communication device (400) of any of Embodiments 25-28, wherein responsive to a low priority channel overlapping with more than one high priority channel, in resolving the overlap, the memory includes instructions that when executed by the processing circuitry causes the communication device to perform operations comprising resolving the overlap between the low priority channel and a subset of the more than one high priority channel.

Embodiment 31. The communication device (400) of Embodiment 30 wherein the subset of the more than one high priority channel comprises a single high priority channel and in resolving the overlap, the memory includes instructions that when executed by the processing circuitry causes the communication device to perform operations comprising resolving the overlap between the low priority channel and the single high priority channel.

Embodiment 32. The communication device (400) of Embodiment 31 wherein the single high priority channel comprises any one of an overlapping high priority channel that starts the earliest and an overlapping high priority channel that has a longest length.

Embodiment 33. The communication device (400) of any of Embodiments 25-32, wherein resolving the overlap includes creating a new channel and in resolving the overlap, the memory includes instructions that when executed by the processing circuitry causes the communication device to perform operations comprising resolving any overlaps in the new channel.

Embodiment 34. The communication device (400) of any of Embodiments 25-33, wherein responsive to a high priority physical uplink shared channel, PUSCH, or a high priority physical uplink control channel, PUCCH, overlapping with a low priority PUCCH that contains hybrid automatic repeat request, HARQ,-feedback and other low priority uplink control information, UCI, in resolving the overlap, the memory includes instructions that when executed by the processing circuitry causes the communication device to perform operations comprising multiplexing the low priority HARQ-feedback onto the high priority PUSCH or the high priority PUCCH and not the other low priority UCI.

Embodiment 35. The communication device (400) of any of Embodiments 25-34, wherein responsive to a high priority physical uplink control channel, PUCCH, carrying high priority uplink control information, UCI, overlaps with a low priority physical uplink shared channel, PUSCH, in resolving the overlap, the memory includes instructions that when executed by the processing circuitry causes the communication device to perform operations comprising multiplexing the high priority UCI from the high priority PUCCH onto the low priority PUSCH.

Embodiment 36. The communication device (400) of Embodiment 35 wherein multiplexing the high priority UCI from the high priority PUCCH onto the low priority PUSCH comprises puncturing the high priority UCI into the low priority PUSCH.

Embodiment 37. The communication device (400) of any of Embodiments 25-36 wherein responsive to a low priority physical uplink shared channel, PUSCH overlaps with a high priority physical uplink control channel, PUCCH, that contains hybrid automatic repeat request, HARQ, -feedback and other high priority uplink control information, UCI, in resolving the overlap, the memory includes instructions that when executed by the processing circuitry causes the communication device to perform operations comprising multiplexing the high priority HARQ-feedback onto the low priority PUSCH or the high priority PUCCH and not the other high priority UCI.

Embodiment 38. The communication device (400) of Embodiment 25-37 wherein in resolving the overlap, the memory includes instructions that when executed by the processing circuitry causes the communication device to perform operations comprising resolving collisions between overlapping physical uplink shared channel, PUSCH, before resolving other overlapping channels.

Embodiment 39. The communication device (400) of Embodiment 38 wherein in resolving collisions between overlapping PUSCH, the memory includes instructions that when executed by the processing circuitry causes the communication device to perform operations comprising comprises dropping low priority PUSCH that collide with high priority PUSCH.

Embodiment 40. The communication device (400) of Embodiment 38 wherein in resolving collisions between overlapping PUSCH, the memory includes instructions that when executed by the processing circuitry causes the communication device to perform operations comprising dropping PUSCH scheduled by configured grant that collide with PUSCH scheduled by downlink control information, DCI.

Embodiment 41. The communication device (400) of Embodiment 38 wherein in resolving collisions between overlapping PUSCH, the memory includes instructions that when executed by the processing circuitry causes the communication device to perform operations comprising dropping PUSCH for which there is no data to transmit that collide with PUSCH for which there is data to transmit.

Embodiment 42. The communication device (400) of any of Embodiments 25-41 wherein in resolving the overlap, the memory includes instructions that when executed by the processing circuitry causes the communication device to perform operations comprising resolving the overlap based on at least one radio resource control, RRC, parameter.

Embodiment 43. The communication device (400) of Embodiment 42 wherein the at least one RRC parameter comprises one or more of:

a highPriorityUciOnLowPriorityPuschEnabled parameter which when enabled, resolving the overlap includes multiplexing High-priority uplink control information, UCI, on low-priority physical uplink shared channel, PUSCH, while low-priority UCI would not be multiplexed on high-priority PUSCH;
a lowPriorityUciOnHighPriorityPuschEnabled parameter which when enabled, resolving the overlap includes multiplexing low-priority UCI on high-priority PUSCH while low-priority UCI would not be multiplexed on high-priority PUSCH;
a lowPriorityHarqAckOnHighPriorityPucch parameter which when enabled, resolving the overlap includes multiplexing only low-priority hybrid automatic repeat request - acknowledge, HARQ-ACK, on high-priority physical uplink control channel, PUCCH; and
a lowPriorityHarqAckSrOnHighPriorityPucch: parameter which when enabled, resolving the overlap includes multiplexing only low-priority HARQ-ACK and/or scheduling request, SR, on high-priority PUCCH.

Embodiment 44. The communication device (400) of any of Embodiments 25-43, wherein in at least one of running the multiplexing procedure for all channels designated as low priority channels and running the multiplexing procedure for all channels designated as high priority channels, the memory includes instructions that when executed by the processing circuitry causes the communication device to perform operations comprising running the multiplexing procedure based on whether priority multiplexing or prioritization/cancelling is designated in downlink control information, DCI.

Embodiment 45. The communication device (400) of Embodiment 44 wherein the DCI is dynamically indicated.

Embodiment 46. The communication device (400) of any of Embodiments 25-45, wherein responsive to there being overlapping between physical uplink control channel, PUCCH, with high priority scheduling request, SR, and a low priority physical uplink shared channel, PUSCH, in resolving the overlap, the memory includes instructions that when executed by the processing circuitry causes the communication device to perform operations comprising dropping the low priority PUSCH.

Embodiment 47. The communication device (400) of any of Embodiments 25-46, wherein responsive to there being overlapping between physical uplink control channel, PUCCH, carrying UCI without high priority scheduling request, SR, and a physical uplink shared channel, PUSCH, resolving the overlap comprises multiplexing the UCI on PUSCH.

Embodiment 48. The communication device (400) of any of Embodiments 25-47, wherein the memory includes further instructions that when executed by the processing circuitry causes the communication device to perform operations further comprising:

responsive to high-priority physical uplink control channels PUCCHs being configured with a different sub-slot configuration than low-priority PUCCHs, modifying (801) timeline conditions by fulfilling multiplexing timeline conditions for each sub-group of channels that starts in a subslot, wherein the subslot resolution is determined by the shortest subslot among the overlapping group of channels; and
responsive to there being a channel outside a sub-group such that multiplexing timeline conditions are not fulfilled for the group including the channel and the sub-group, resolving (803) the overlap comprises stopping/cancelling low priority channels.

Embodiment 49. A communication device (400) adapted to perform according to any of Embodiments 1-24.

Embodiment 50. A computer program comprising program code to be executed by processing circuitry (403) of a communication device (400), whereby execution of the program code causes the communication device (400) to perform operations according to any of Embodiments 1-24.

Embodiment 51. A computer program product comprising a non-transitory storage medium including program code to be executed by processing circuitry (403) of a communication device (400), whereby execution of the program code causes the communication device (400) to perform operations according to any of Embodiments 1-24.

Explanations are provided below for various abbreviations/acronyms used in the present disclosure.

| Abbreviation | Explanation |
| --- | --- |
| PUCCH | Physical Uplink Control Channel |
| PUSCH | Physical Uplink Shared Channel |
| PDCCH | Physical Downlink Control Channel |
| PDSCH | Physical Downlink Shared Channel |
| UCI | Uplink Control Information |
| DCI | Downlink Control Information |
| HAR\Q | Hybrid Automatic Repeat Request |
| HARQ-ACK | HARQ-Acknowledgement |
| SR | Scheduling Request |
| CSI | Channel State Information |

References are identified below.
3GPP 38.213-g30; 3GPP; Technical Specification Group Radio Access Network; NR; Physical layer procedures for control (Release 16)

Additional explanation is provided below.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Figure 9 illustrates a wireless network in accordance with some embodiments.

Although the subject matter described herein may be implemented in any appropriate type of system using any suitable components, the embodiments disclosed herein are described in relation to a wireless network, such as the example wireless network illustrated in Figure 9. For simplicity, the wireless network of Figure 9 only depicts network 906, network nodes 960 and 960b, and WDs 910, 910b, and 910c (also referred to as mobile terminals). In practice, a wireless network may further include any additional elements suitable to support communication between wireless devices or between a wireless device and another communication device, such as a landline telephone, a service provider, or any other network node or end device. Of the illustrated components, network node 960 and wireless device (WD) 910 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 906 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 960 and WD 910 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and new radio (NR) NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., mobile switching centers (MSCs), mobility management entities (MMEs)), operation and maintenance (O&M) nodes, operations support system (OSS) nodes, self-optimized network (SON) nodes, positioning nodes (e.g., evolved Serving Mobile Location Centers (E-SMLCs)), and/or minimization of drive tests (MDTs). As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 9, network node 960 includes processing circuitry 970, device readable medium 980, interface 990, auxiliary equipment 984, power source 986, power circuitry 987, and antenna 962. Although network node 960 illustrated in the example wireless network of Figure 9 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 960 are depicted as single boxes located within a larger box, or nested within multiple boxes, in practice, a network node may comprise multiple different physical components that make up a single illustrated component (e.g., device readable medium 980 may comprise multiple separate hard drives as well as multiple RAM modules).

Similarly, network node 960 may be composed of multiple physically separate components (e.g., a NodeB component and a RNC component, or a BTS component and a BSC component, etc.), which may each have their own respective components. In certain scenarios in which network node 960 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 960 may be configured to support multiple radio access technologies (RATs). In such embodiments, some components may be duplicated (e.g., separate device readable medium 980 for the different RATs) and some components may be reused (e.g., the same antenna 962 may be shared by the RATs). Network node 960 may also include multiple sets of the various illustrated components for different wireless technologies integrated into network node 960, such as, for example, GSM, wide cod division multiplexing access (WCDMA), LTE, NR, WiFi, or Bluetooth wireless technologies. These wireless technologies may be integrated into the same or different chip or set of chips and other components within network node 960.

Processing circuitry 970 is configured to perform any determining, calculating, or similar operations (e.g., certain obtaining operations) described herein as being provided by a network node. These operations performed by processing circuitry 970 may include processing information obtained by processing circuitry 970 by, for example, converting the obtained information into other information, comparing the obtained information or converted information to information stored in the network node, and/or performing one or more operations based on the obtained information or converted information, and as a result of said processing making a determination.

Processing circuitry 970 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 960 components, such as device readable medium 980, network node 960 functionality. For example, processing circuitry 970 may execute instructions stored in device readable medium 980 or in memory within processing circuitry 970. Such functionality may include providing any of the various wireless features, functions, or benefits discussed herein. In some embodiments, processing circuitry 970 may include a system on a chip (SOC).

In some embodiments, processing circuitry 970 may include one or more of radio frequency (RF) transceiver circuitry 972 and baseband processing circuitry 974. In some embodiments, radio frequency (RF) transceiver circuitry 972 and baseband processing circuitry 974 may be on separate chips (or sets of chips), boards, or units, such as radio units and digital units. In alternative embodiments, part or all of RF transceiver circuitry 972 and baseband processing circuitry 974 may be on the same chip or set of chips, boards, or units

In certain embodiments, some or all of the functionality described herein as being provided by a network node, base station, eNB or other such network device may be performed by processing circuitry 970 executing instructions stored on device readable medium 980 or memory within processing circuitry 970. In alternative embodiments, some or all of the functionality may be provided by processing circuitry 970 without executing instructions stored on a separate or discrete device readable medium, such as in a hard-wired manner. In any of those embodiments, whether executing instructions stored on a device readable storage medium or not, processing circuitry 970 can be configured to perform the described functionality. The benefits provided by such functionality are not limited to processing circuitry 970 alone or to other components of network node 960, but are enjoyed by network node 960 as a whole, and/or by end users and the wireless network generally.

Device readable medium 980 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 970. Device readable medium 980 may store any suitable instructions, data or information, including a computer program, software, an application including one or more of logic, rules, code, tables, etc. and/or other instructions capable of being executed by processing circuitry 970 and, utilized by network node 960. Device readable medium 980 may be used to store any calculations made by processing circuitry 970 and/or any data received via interface 990. In some embodiments, processing circuitry 970 and device readable medium 980 may be considered to be integrated.

Interface 990 is used in the wired or wireless communication of signalling and/or data between network node 960, network 906, and/or WDs 910. As illustrated, interface 990 comprises port(s)/terminal(s) 994 to send and receive data, for example to and from network 906 over a wired connection. Interface 990 also includes radio front end circuitry 992 that may be coupled to, or in certain embodiments a part of, antenna 962. Radio front end circuitry 992 comprises filters 998 and amplifiers 996. Radio front end circuitry 992 may be connected to antenna 962 and processing circuitry 970. Radio front end circuitry may be configured to condition signals communicated between antenna 962 and processing circuitry 970. Radio front end circuitry 992 may receive digital data that is to be sent out to other network nodes or WDs via a wireless connection. Radio front end circuitry 992 may convert the digital data into a radio signal having the appropriate channel and bandwidth parameters using a combination of filters 998 and/or amplifiers 996. The radio signal may then be transmitted via antenna 962. Similarly, when receiving data, antenna 962 may collect radio signals which are then converted into digital data by radio front end circuitry 992. The digital data may be passed to processing circuitry 970. In other embodiments, the interface may comprise different components and/or different combinations of components.

In certain alternative embodiments, network node 960 may not include separate radio front end circuitry 992, instead, processing circuitry 970 may comprise radio front end circuitry and may be connected to antenna 962 without separate radio front end circuitry 992. Similarly, in some embodiments, all or some of RF transceiver circuitry 972 may be considered a part of interface 990. In still other embodiments, interface 990 may include one or more ports or terminals 994, radio front end circuitry 992, and RF transceiver circuitry 972, as part of a radio unit (not shown), and interface 990 may communicate with baseband processing circuitry 974, which is part of a digital unit (not shown).

Antenna 962 may include one or more antennas, or antenna arrays, configured to send and/or receive wireless signals. Antenna 962 may be coupled to radio front end circuitry 992 and may be any type of antenna capable of transmitting and receiving data and/or signals wirelessly. In some embodiments, antenna 962 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 962 may be separate from network node 960 and may be connectable to network node 960 through an interface or port.

Antenna 962, interface 990, and/or processing circuitry 970 may be configured to perform any receiving operations and/or certain obtaining operations described herein as being performed by a network node. Any information, data and/or signals may be received from a wireless device, another network node and/or any other network equipment. Similarly, antenna 962, interface 990, and/or processing circuitry 970 may be configured to perform any transmitting operations described herein as being performed by a network node. Any information, data and/or signals may be transmitted to a wireless device, another network node and/or any other network equipment.

Power circuitry 987 may comprise, or be coupled to, power management circuitry and is configured to supply the components of network node 960 with power for performing the functionality described herein. Power circuitry 987 may receive power from power source 986. Power source 986 and/or power circuitry 987 may be configured to provide power to the various components of network node 960 in a form suitable for the respective components (e.g., at a voltage and current level needed for each respective component). Power source 986 may either be included in, or external to, power circuitry 987 and/or network node 960. For example, network node 960 may be connectable to an external power source (e.g., an electricity outlet) via an input circuitry or interface such as an electrical cable, whereby the external power source supplies power to power circuitry 987. As a further example, power source 986 may comprise a source of power in the form of a battery or battery pack which is connected to, or integrated in, power circuitry 987. The battery may provide backup power should the external power source fail. Other types of power sources, such as photovoltaic devices, may also be used.

Alternative embodiments of network node 960 may include additional components beyond those shown in Figure 9 that may be responsible for providing certain aspects of the network node's functionality, including any of the functionality described herein and/or any functionality necessary to support the subject matter described herein. For example, network node 960 may include user interface equipment to allow input of information into network node 960 and to allow output of information from network node 960. This may allow a user to perform diagnostic, maintenance, repair, and other administrative functions for network node 960.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 910 includes antenna 911, interface 914, processing circuitry 920, device readable medium 930, user interface equipment 932, auxiliary equipment 934, power source 936 and power circuitry 937. WD 910 may include multiple sets of one or more of the illustrated components for different wireless technologies supported by WD 910, such as, for example, GSM, WCDMA, LTE, NR, WiFi, WiMAX, or Bluetooth wireless technologies, just to mention a few. These wireless technologies may be integrated into the same or different chips or set of chips as other components within WD 910.

Antenna 911 may include one or more antennas or antenna arrays, configured to send and/or receive wireless signals, and is connected to interface 914. In certain alternative embodiments, antenna 911 may be separate from WD 910 and be connectable to WD 910 through an interface or port. Antenna 911, interface 914, and/or processing circuitry 920 may be configured to perform any receiving or transmitting operations described herein as being performed by a WD. Any information, data and/or signals may be received from a network node and/or another WD. In some embodiments, radio front end circuitry and/or antenna 911 may be considered an interface.

As illustrated, interface 914 comprises radio front end circuitry 912 and antenna 911. Radio front end circuitry 912 comprise one or more filters 918 and amplifiers 916. Radio front end circuitry 912 is connected to antenna 911 and processing circuitry 920, and is configured to condition signals communicated between antenna 911 and processing circuitry 920. Radio front end circuitry 912 may be coupled to or a part of antenna 911. In some embodiments, WD 910 may not include separate radio front end circuitry 912; rather, processing circuitry 920 may comprise radio front end circuitry and may be connected to antenna 911. Similarly, in some embodiments, some or all of RF transceiver circuitry 922 may be considered a part of interface 914. Radio front end circuitry 912 may receive digital data that is to be sent out to other network nodes or WDs via a wireless connection. Radio front end circuitry 912 may convert the digital data into a radio signal having the appropriate channel and bandwidth parameters using a combination of filters 918 and/or amplifiers 916. The radio signal may then be transmitted via antenna 911. Similarly, when receiving data, antenna 911 may collect radio signals which are then converted into digital data by radio front end circuitry 912. The digital data may be passed to processing circuitry 920. In other embodiments, the interface may comprise different components and/or different combinations of components.

Processing circuitry 920 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 910 components, such as device readable medium 930, WD 910 functionality. Such functionality may include providing any of the various wireless features or benefits discussed herein. For example, processing circuitry 920 may execute instructions stored in device readable medium 930 or in memory within processing circuitry 920 to provide the functionality disclosed herein.

As illustrated, processing circuitry 920 includes one or more of RF transceiver circuitry 922, baseband processing circuitry 924, and application processing circuitry 926. In other embodiments, the processing circuitry may comprise different components and/or different combinations of components. In certain embodiments processing circuitry 920 of WD 910 may comprise a SOC. In some embodiments, RF transceiver circuitry 922, baseband processing circuitry 924, and application processing circuitry 926 may be on separate chips or sets of chips. In alternative embodiments, part or all of baseband processing circuitry 924 and application processing circuitry 926 may be combined into one chip or set of chips, and RF transceiver circuitry 922 may be on a separate chip or set of chips. In still alternative embodiments, part or all of RF transceiver circuitry 922 and baseband processing circuitry 924 may be on the same chip or set of chips, and application processing circuitry 926 may be on a separate chip or set of chips. In yet other alternative embodiments, part or all of RF transceiver circuitry 922, baseband processing circuitry 924, and application processing circuitry 926 may be combined in the same chip or set of chips. In some embodiments, RF transceiver circuitry 922 may be a part of interface 914. RF transceiver circuitry 922 may condition RF signals for processing circuitry 920.

In certain embodiments, some or all of the functionality described herein as being performed by a WD may be provided by processing circuitry 920 executing instructions stored on device readable medium 930, which in certain embodiments may be a computer-readable storage medium. In alternative embodiments, some or all of the functionality may be provided by processing circuitry 920 without executing instructions stored on a separate or discrete device readable storage medium, such as in a hard-wired manner. In any of those particular embodiments, whether executing instructions stored on a device readable storage medium or not, processing circuitry 920 can be configured to perform the described functionality. The benefits provided by such functionality are not limited to processing circuitry 920 alone or to other components of WD 910, but are enjoyed by WD 910 as a whole, and/or by end users and the wireless network generally.

Processing circuitry 920 may be configured to perform any determining, calculating, or similar operations (e.g., certain obtaining operations) described herein as being performed by a WD. These operations, as performed by processing circuitry 920, may include processing information obtained by processing circuitry 920 by, for example, converting the obtained information into other information, comparing the obtained information or converted information to information stored by WD 910, and/or performing one or more operations based on the obtained information or converted information, and as a result of said processing making a determination.

Device readable medium 930 may be operable to store a computer program, software, an application including one or more of logic, rules, code, tables, etc. and/or other instructions capable of being executed by processing circuitry 920. Device readable medium 930 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 920. In some embodiments, processing circuitry 920 and device readable medium 930 may be considered to be integrated.

User interface equipment 932 may provide components that allow for a human user to interact with WD 910. Such interaction may be of many forms, such as visual, audial, tactile, etc. User interface equipment 932 may be operable to produce output to the user and to allow the user to provide input to WD 910. The type of interaction may vary depending on the type of user interface equipment 932 installed in WD 910. For example, if WD 910 is a smart phone, the interaction may be via a touch screen; if WD 910 is a smart meter, the interaction may be through a screen that provides usage (e.g., the number of gallons used) or a speaker that provides an audible alert (e.g., if smoke is detected). User interface equipment 932 may include input interfaces, devices and circuits, and output interfaces, devices and circuits. User interface equipment 932 is configured to allow input of information into WD 910, and is connected to processing circuitry 920 to allow processing circuitry 920 to process the input information. User interface equipment 932 may include, for example, a microphone, a proximity or other sensor, keys/buttons, a touch display, one or more cameras, a USB port, or other input circuitry. User interface equipment 932 is also configured to allow output of information from WD 910, and to allow processing circuitry 920 to output information from WD 910. User interface equipment 932 may include, for example, a speaker, a display, vibrating circuitry, a USB port, a headphone interface, or other output circuitry. Using one or more input and output interfaces, devices, and circuits, of user interface equipment 932, WD 910 may communicate with end users and/or the wireless network, and allow them to benefit from the functionality described herein.

Auxiliary equipment 934 is operable to provide more specific functionality which may not be generally performed by WDs. This may comprise specialized sensors for doing measurements for various purposes, interfaces for additional types of communication such as wired communications etc. The inclusion and type of components of auxiliary equipment 934 may vary depending on the embodiment and/or scenario.

Power source 936 may, in some embodiments, be in the form of a battery or battery pack. Other types of power sources, such as an external power source (e.g., an electricity outlet), photovoltaic devices or power cells, may also be used. WD 910 may further comprise power circuitry 937 for delivering power from power source 936 to the various parts of WD 910 which need power from power source 936 to carry out any functionality described or indicated herein. Power circuitry 937 may in certain embodiments comprise power management circuitry. Power circuitry 937 may additionally or alternatively be operable to receive power from an external power source; in which case WD 910 may be connectable to the external power source (such as an electricity outlet) via input circuitry or an interface such as an electrical power cable. Power circuitry 937 may also in certain embodiments be operable to deliver power from an external power source to power source 936. This may be, for example, for the charging of power source 936. Power circuitry 937 may perform any formatting, converting, or other modification to the power from power source 936 to make the power suitable for the respective components of WD 910 to which power is supplied.

Figure 10 illustrates a user Equipment in accordance with some embodiments.

Figure 10 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 1000 may be any UE identified by the 3rd Generation Partnership Project (3GPP), including a NB-IoT UE, a machine type communication (MTC) UE, and/or an enhanced MTC (eMTC) UE. UE 1000, as illustrated in Figure 10, is one example of a WD configured for communication in accordance with one or more communication standards promulgated by the 3rd Generation Partnership Project (3GPP), such as 3GPP's GSM, UMTS, LTE, and/or 5th generation (5G) standards. As mentioned previously, the term WD and UE may be used interchangeable. Accordingly, although Figure 10 is a UE, the components discussed herein are equally applicable to a WD, and vice-versa.

In Figure 10, UE 1000 includes processing circuitry 1001 that is operatively coupled to input/output interface 1005, radio frequency (RF) interface 1009, network connection interface 1011, memory 1015 including random access memory (RAM) 1017, read-only memory (ROM) 1019, and storage medium 1021 or the like, communication subsystem 1031, power source 1013, and/or any other component, or any combination thereof. Storage medium 1021 includes operating system 1023, application program 1025, and data 1027. In other embodiments, storage medium 1021 may include other similar types of information. Certain UEs may utilize all of the components shown in Figure 10, or only a subset of the components. The level of integration between the components may vary from one UE to another UE. Further, certain UEs may contain multiple instances of a component, such as multiple processors, memories, transceivers, transmitters, receivers, etc.

In Figure 10, processing circuitry 1001 may be configured to process computer instructions and data. Processing circuitry 1001 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1001 may include two central processing units (CPUs). Data may be information in a form suitable for use by a computer.

In the depicted embodiment, input/output interface 1005 may be configured to provide a communication interface to an input device, output device, or input and output device. UE 1000 may be configured to use an output device via input/output interface 1005. An output device may use the same type of interface port as an input device. For example, a USB port may be used to provide input to and output from UE 1000. The output device may be a speaker, a sound card, a video card, a display, a monitor, a printer, an actuator, an emitter, a smartcard, another output device, or any combination thereof. UE 1000 may be configured to use an input device via input/output interface 1005 to allow a user to capture information into UE 1000. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 10, RF interface 1009 may be configured to provide a communication interface to RF components such as a transmitter, a receiver, and an antenna. Network connection interface 1011 may be configured to provide a communication interface to network 1043a. Network 1043a may encompass wired and/or wireless networks such as a local-area network (LAN), a wide-area network (WAN), a computer network, a wireless network, a telecommunications network, another like network or any combination thereof. For example, network 1043a may comprise a Wi-Fi network. Network connection interface 1011 may be configured to include a receiver and a transmitter interface used to communicate with one or more other devices over a communication network according to one or more communication protocols, such as Ethernet, TCP/IP, SONET, ATM, or the like. Network connection interface 1011 may implement receiver and transmitter functionality appropriate to the communication network links (e.g., optical, electrical, and the like). The transmitter and receiver functions may share circuit components, software or firmware, or alternatively may be implemented separately.

RAM 1017 may be configured to interface via bus 1002 to processing circuitry 1001 to provide storage or caching of data or computer instructions during the execution of software programs such as the operating system, application programs, and device drivers. ROM 1019 may be configured to provide computer instructions or data to processing circuitry 1001. For example, ROM 1019 may be configured to store invariant low-level system code or data for basic system functions such as basic input and output (I/O), startup, or reception of keystrokes from a keyboard that are stored in a non-volatile memory. Storage medium 1021 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1021 may be configured to include operating system 1023, application program 1025 such as a web browser application, a widget or gadget engine or another application, and data file 1027. Storage medium 1021 may store, for use by UE 1000, any of a variety of various operating systems or combinations of operating systems.

Storage medium 1021 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1021 may allow UE 1000 to access computer-executable instructions, application programs or the like, stored on transitory or non-transitory memory media, to offload data, or to upload data. An article of manufacture, such as one utilizing a communication system may be tangibly embodied in storage medium 1021, which may comprise a device readable medium.

In Figure 10, processing circuitry 1001 may be configured to communicate with network 1043b using communication subsystem 1031. Network 1043a and network 1043b may be the same network or networks or different network or networks. Communication subsystem 1031 may be configured to include one or more transceivers used to communicate with network 1043b. For example, communication subsystem 1031 may be configured to include one or more transceivers used to communicate with one or more remote transceivers of another device capable of wireless communication such as another WD, UE, or base station of a radio access network (RAN) according to one or more communication protocols, such as IEEE 802.11, code division multiplexing access (CDMA), wide CDMA (WCDMA), global system for mobile communications (GSM), LTE, universal terrestrial radio access network (UTRAN), WiMax, or the like. Each transceiver may include transmitter 1033 and/or receiver 1035 to implement transmitter or receiver functionality, respectively, appropriate to the RAN links (e.g., frequency allocations and the like). Further, transmitter 1033 and receiver 1035 of each transceiver may share circuit components, software or firmware, or alternatively may be implemented separately.

In the illustrated embodiment, the communication functions of communication subsystem 1031 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1031 may include cellular communication, Wi-Fi communication, Bluetooth communication, and GPS communication. Network 1043b may encompass wired and/or wireless networks such as a local-area network (LAN), a wide-area network (WAN), a computer network, a wireless network, a telecommunications network, another like network or any combination thereof. For example, network 1043b may be a cellular network, a Wi-Fi network, and/or a near-field network. Power source 1013 may be configured to provide alternating current (AC) or direct current (DC) power to components of UE 1000.

The features, benefits and/or functions described herein may be implemented in one of the components of UE 1000 or partitioned across multiple components of UE 1000. Further, the features, benefits, and/or functions described herein may be implemented in any combination of hardware, software or firmware. In one example, communication subsystem 1031 may be configured to include any of the components described herein. Further, processing circuitry 1001 may be configured to communicate with any of such components over bus 1002. In another example, any of such components may be represented by program instructions stored in memory that when executed by processing circuitry 1001 perform the corresponding functions described herein. In another example, the functionality of any of such components may be partitioned between processing circuitry 1001 and communication subsystem 1031. In another example, the non-computationally intensive functions of any of such components may be implemented in software or firmware and the computationally intensive functions may be implemented in hardware.

Figure 11 illustrates a virtualization environment in accordance with some embodiments.

Figure 11 is a schematic block diagram illustrating a virtualization environment 1100 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1100 hosted by one or more of hardware nodes 1130. Further, in embodiments in which the virtual node is not a radio access node or does not require radio connectivity (e.g., a core network node), then the network node may be entirely virtualized.

The functions may be implemented by one or more applications 1120 (which may alternatively be called software instances, virtual appliances, network functions, virtual nodes, virtual network functions, etc.) operative to implement some of the features, functions, and/or benefits of some of the embodiments disclosed herein. Applications 1120 are run in virtualization environment 1100 which provides hardware 1130 comprising processing circuitry 1160 and memory 1190. Memory 1190 contains instructions 1195 executable by processing circuitry 1160 whereby application 1120 is operative to provide one or more of the features, benefits, and/or functions disclosed herein.

Virtualization environment 1100, comprises general-purpose or special-purpose network hardware devices 1130 comprising a set of one or more processors or processing circuitry 1160, which may be commercial off-the-shelf (COTS) processors, dedicated Application Specific Integrated Circuits (ASICs), or any other type of processing circuitry including digital or analog hardware components or special purpose processors. Each hardware device may comprise memory 1190-1 which may be non-persistent memory for temporarily storing instructions 1195 or software executed by processing circuitry 1160. Each hardware device may comprise one or more network interface controllers (NICs) 1170, also known as network interface cards, which include physical network interface 1180. Each hardware device may also include non-transitory, persistent, machine-readable storage media 1190-2 having stored therein software 1195 and/or instructions executable by processing circuitry 1160. Software 1195 may include any type of software including software for instantiating one or more virtualization layers 1150 (also referred to as hypervisors), software to execute virtual machines 1140 as well as software allowing it to execute functions, features and/or benefits described in relation with some embodiments described herein.

Virtual machines 1140 comprise virtual processing, virtual memory, virtual networking or interface and virtual storage, and may be run by a corresponding virtualization layer 1150 or hypervisor. Different embodiments of the instance of virtual appliance 1120 may be implemented on one or more of virtual machines 1140, and the implementations may be made in different ways.

During operation, processing circuitry 1160 executes software 1195 to instantiate the hypervisor or virtualization layer 1150, which may sometimes be referred to as a virtual machine monitor (VMM). Virtualization layer 1150 may present a virtual operating platform that appears like networking hardware to virtual machine 1140.

As shown in Figure 11, hardware 1130 may be a standalone network node with generic or specific components. Hardware 1130 may comprise antenna 11225 and may implement some functions via virtualization. Alternatively, hardware 1130 may be part of a larger cluster of hardware (e.g. such as in a data center or customer premise equipment (CPE)) where many hardware nodes work together and are managed via management and orchestration (MANO) 11100, which, among others, oversees lifecycle management of applications 1120.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1140 may be a software implementation of a physical machine that runs programs as if they were executing on a physical, non-virtualized machine. Each of virtual machines 1140, and that part of hardware 1130 that executes that virtual machine, be it hardware dedicated to that virtual machine and/or hardware shared by that virtual machine with others of the virtual machines 1140, forms a separate virtual network elements (VNE).

Still in the context of NFV, Virtual Network Function (VNF) is responsible for handling specific network functions that run in one or more virtual machines 1140 on top of hardware networking infrastructure 1130 and corresponds to application 1120 in Figure 11.

In some embodiments, one or more radio units 11200 that each include one or more transmitters 11220 and one or more receivers 11210 may be coupled to one or more antennas 11225. Radio units 11200 may communicate directly with hardware nodes 1130 via one or more appropriate network interfaces and may be used in combination with the virtual components to provide a virtual node with radio capabilities, such as a radio access node or a base station.

In some embodiments, some signalling can be effected with the use of control system 11230 which may alternatively be used for communication between the hardware nodes 1130 and radio units 11200.

Figure 12 illustrates a telecommunication network connected via an intermediate network to a host computer in accordance with some embodiments.

With reference to Figure 12, in accordance with an embodiment, a communication system includes telecommunication network 1210, such as a 3GPP-type cellular network, which comprises access network 1211, such as a radio access network, and core network 1214. Access network 1211 comprises a plurality of base stations 1212a, 1212b, 1212c, such as NBs, eNBs, gNBs or other types of wireless access points, each defining a corresponding coverage area 1213a, 1213b, 1213c. Each base station 1212a, 1212b, 1212c is connectable to core network 1214 over a wired or wireless connection 1215. A first UE 1291 located in coverage area 1213c is configured to wirelessly connect to, or be paged by, the corresponding base station 1212c. A second UE 1292 in coverage area 1213a is wirelessly connectable to the corresponding base station 1212a. While a plurality of UEs 1291, 1292 are illustrated in this example, the disclosed embodiments are equally applicable to a situation where a sole UE is in the coverage area or where a sole UE is connecting to the corresponding base station 1212.

Telecommunication network 1210 is itself connected to host computer 1230, which may be embodied in the hardware and/or software of a standalone server, a cloud-implemented server, a distributed server or as processing resources in a server farm. Host computer 1230 may be under the ownership or control of a service provider, or may be operated by the service provider or on behalf of the service provider. Connections 1221 and 1222 between telecommunication network 1210 and host computer 1230 may extend directly from core network 1214 to host computer 1230 or may go via an optional intermediate network 1220. Intermediate network 1220 may be one of, or a combination of more than one of, a public, private or hosted network; intermediate network 1220, if any, may be a backbone network or the Internet; in particular, intermediate network 1220 may comprise two or more sub-networks (not shown).

The communication system of Figure 12 as a whole enables connectivity between the connected UEs 1291, 1292 and host computer 1230. The connectivity may be described as an over-the-top (OTT) connection 1250. Host computer 1230 and the connected UEs 1291, 1292 are configured to communicate data and/or signaling via OTT connection 1250, using access network 1211, core network 1214, any intermediate network 1220 and possible further infrastructure (not shown) as intermediaries. OTT connection 1250 may be transparent in the sense that the participating communication devices through which OTT connection 1250 passes are unaware of routing of uplink and downlink communications. For example, base station 1212 may not or need not be informed about the past routing of an incoming downlink communication with data originating from host computer 1230 to be forwarded (e.g., handed over) to a connected UE 1291. Similarly, base station 1212 need not be aware of the future routing of an outgoing uplink communication originating from the UE 1291 towards the host computer 1230.

Figure 13 illustrates a host computer communicating via a base station with a user equipment over a partially wireless connection in accordance with some embodiments.

Example implementations, in accordance with an embodiment, of the UE, base station and host computer discussed in the preceding paragraphs will now be described with reference to Figure 13. In communication system 1300, host computer 1310 comprises hardware 1315 including communication interface 1316 configured to set up and maintain a wired or wireless connection with an interface of a different communication device of communication system 1300. Host computer 1310 further comprises processing circuitry 1318, which may have storage and/or processing capabilities. In particular, processing circuitry 1318 may comprise one or more programmable processors, application-specific integrated circuits, field programmable gate arrays or combinations of these (not shown) adapted to execute instructions. Host computer 1310 further comprises software 1311, which is stored in or accessible by host computer 1310 and executable by processing circuitry 1318. Software 1311 includes host application 1312. Host application 1312 may be operable to provide a service to a remote user, such as UE 1330 connecting via OTT connection 1350 terminating at UE 1330 and host computer 1310. In providing the service to the remote user, host application 1312 may provide user data which is transmitted using OTT connection 1350.

Communication system 1300 further includes base station 1320 provided in a telecommunication system and comprising hardware 1325 enabling it to communicate with host computer 1310 and with UE 1330. Hardware 1325 may include communication interface 1326 for setting up and maintaining a wired or wireless connection with an interface of a different communication device of communication system 1300, as well as radio interface 1327 for setting up and maintaining at least wireless connection 1370 with UE 1330 located in a coverage area (not shown in Figure 13) served by base station 1320. Communication interface 1326 may be configured to facilitate connection 1360 to host computer 1310. Connection 1360 may be direct or it may pass through a core network (not shown in Figure 13) of the telecommunication system and/or through one or more intermediate networks outside the telecommunication system. In the embodiment shown, hardware 1325 of base station 1320 further includes processing circuitry 1328, which may comprise one or more programmable processors, application-specific integrated circuits, field programmable gate arrays or combinations of these (not shown) adapted to execute instructions. Base station 1320 further has software 1321 stored internally or accessible via an external connection.

Communication system 1300 further includes UE 1330 already referred to. Its hardware 1335 may include radio interface 1337 configured to set up and maintain wireless connection 1370 with a base station serving a coverage area in which UE 1330 is currently located. Hardware 1335 of UE 1330 further includes processing circuitry 1338, which may comprise one or more programmable processors, application-specific integrated circuits, field programmable gate arrays or combinations of these (not shown) adapted to execute instructions. UE 1330 further comprises software 1331, which is stored in or accessible by UE 1330 and executable by processing circuitry 1338. Software 1331 includes client application 1332. Client application 1332 may be operable to provide a service to a human or non-human user via UE 1330, with the support of host computer 1310. In host computer 1310, an executing host application 1312 may communicate with the executing client application 1332 via OTT connection 1350 terminating at UE 1330 and host computer 1310. In providing the service to the user, client application 1332 may receive request data from host application 1312 and provide user data in response to the request data. OTT connection 1350 may transfer both the request data and the user data. Client application 1332 may interact with the user to generate the user data that it provides.

It is noted that host computer 1310, base station 1320 and UE 1330 illustrated in Figure 13 may be similar or identical to host computer 1230, one of base stations 1212a, 1212b, 1212c and one of UEs 1291, 1292 of Figure 12, respectively. This is to say, the inner workings of these entities may be as shown in Figure 13 and independently, the surrounding network topology may be that of Figure 12.

In Figure 13, OTT connection 1350 has been drawn abstractly to illustrate the communication between host computer 1310 and UE 1330 via base station 1320, without explicit reference to any intermediary devices and the precise routing of messages via these devices. Network infrastructure may determine the routing, which it may be configured to hide from UE 1330 or from the service provider operating host computer 1310, or both. While OTT connection 1350 is active, the network infrastructure may further take decisions by which it dynamically changes the routing (e.g., on the basis of load balancing consideration or reconfiguration of the network).

Wireless connection 1370 between UE 1330 and base station 1320 is in accordance with the teachings of the embodiments described throughout this disclosure. One or more of the various embodiments may improve the performance of OTT services provided to UE 1330 using OTT connection 1350, in which wireless connection 1370 forms the last segment. More precisely, the teachings of these embodiments may improve the random access speed and/or reduce random access failure rates and thereby provide benefits such as faster and/or more reliable random access.

A measurement procedure may be provided for the purpose of monitoring data rate, latency and other factors on which the one or more embodiments improve. There may further be an optional network functionality for reconfiguring OTT connection 1350 between host computer 1310 and UE 1330, in response to variations in the measurement results. The measurement procedure and/or the network functionality for reconfiguring OTT connection 1350 may be implemented in software 1311 and hardware 1315 of host computer 1310 or in software 1331 and hardware 1335 of UE 1330, or both. In embodiments, sensors (not shown) may be deployed in or in association with communication devices through which OTT connection 1350 passes; the sensors may participate in the measurement procedure by supplying values of the monitored quantities exemplified above, or supplying values of other physical quantities from which software 1311, 1331 may compute or estimate the monitored quantities. The reconfiguring of OTT connection 1350 may include message format, retransmission settings, preferred routing etc.; the reconfiguring need not affect base station 1320, and it may be unknown or imperceptible to base station 1320. Such procedures and functionalities may be known and practiced in the art. In certain embodiments, measurements may involve proprietary UE signaling facilitating host computer 1310' s measurements of throughput, propagation times, latency and the like. The measurements may be implemented in that software 1311 and 1331 causes messages to be transmitted, in particular empty or 'dummy' messages, using OTT connection 1350 while it monitors propagation times, errors etc.

Figure 14 illustrates methods implemented in a communication system including a host computer, a base station and a user equipment in accordance with some embodiments.

Figure 14 is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 14 will be included in this section. In step 1410, the host computer provides user data. In substep 1411 (which may be optional) of step 1410, the host computer provides the user data by executing a host application. In step 1420, the host computer initiates a transmission carrying the user data to the UE. In step 1430 (which may be optional), the base station transmits to the UE the user data which was carried in the transmission that the host computer initiated, in accordance with the teachings of the embodiments described throughout this disclosure. In step 1440 (which may also be optional), the UE executes a client application associated with the host application executed by the host computer.

Figure 15 illustrates methods implemented in a communication system including a host computer, a base station and a user equipment in accordance with some embodiments.

Figure 15 is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 15 will be included in this section. In step 1510 of the method, the host computer provides user data. In an optional substep (not shown) the host computer provides the user data by executing a host application. In step 1520, the host computer initiates a transmission carrying the user data to the UE. The transmission may pass via the base station, in accordance with the teachings of the embodiments described throughout this disclosure. In step 1530 (which may be optional), the UE receives the user data carried in the transmission.

Figure 16 illustrates methods implemented in a communication system including a host computer, a base station and a user equipment in accordance with some embodiments

Figure 16 is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 16 will be included in this section. In step 1610 (which may be optional), the UE receives input data provided by the host computer. Additionally or alternatively, in step 1620, the UE provides user data. In substep 1621 (which may be optional) of step 1620, the UE provides the user data by executing a client application. In substep 1611 (which may be optional) of step 1610, the UE executes a client application which provides the user data in reaction to the received input data provided by the host computer. In providing the user data, the executed client application may further consider user input received from the user. Regardless of the specific manner in which the user data was provided, the UE initiates, in substep 1630 (which may be optional), transmission of the user data to the host computer. In step 1640 of the method, the host computer receives the user data transmitted from the UE, in accordance with the teachings of the embodiments described throughout this disclosure.

Figure 17 illustrates methods implemented in a communication system including a host computer, a base station and a user equipment in accordance with some embodiments

Figure 17 is a flowchart illustrating a method implemented in a communication system, in accordance with one embodiment. The communication system includes a host computer, a base station and a UE which may be those described with reference to Figures 12 and 13. For simplicity of the present disclosure, only drawing references to Figure 17 will be included in this section. In step 1710 (which may be optional), in accordance with the teachings of the embodiments described throughout this disclosure, the base station receives user data from the UE. In step 1720 (which may be optional), the base station initiates transmission of the received user data to the host computer. In step 1730 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the examples of embodiments are intended to cover all such modifications, enhancements, and other embodiments, which fall within the spirit and scope of present inventive concepts. Thus, to the maximum extent allowed by law, the scope of present inventive concepts are to be determined by the broadest permissible interpretation of the present disclosure including the examples of embodiments and their equivalents, and shall not be restricted or limited by the foregoing detailed description.

## Claims

1. A method performed by a communication device (400, 910, 1000, 1130, 1140, 1291, 1292, 1330), the method comprising:

   multiplexing low priority channels without considering presence of channels designated as high priority channels;
   multiplexing high priority channels without considering presence of low priority channels; and
   responsive to there being an overlap between a non-overlapping low priority channel and a non-overlapping high priority channel, resolving (705) the overlap.

2. The method of Claim 1 wherein resolving the overlap comprises implementing a channel carrying both high priority information and low priority information.

3. The method of any of Claims 1-2, wherein resolving the overlap comprises resolving the overlap per sub-slot of a channel.

4. The method of any of Claims 1-3, wherein resolving the overlap comprises dropping low priority channel state information, CSI, and low priority scheduling requests.

5. The method of any of Claims 1-4, wherein resolving the overlap further comprises dropping low-priority data responsive to the low-priority data colliding with a channel carrying high priority data.

6. The method of any of Claims 1-4, wherein responsive to a low priority channel overlapping with more than one high priority channel, resolving the overlap comprises resolving the overlap between the low priority channel and a subset of the more than one high priority channel.

7. The method of Claim 6 wherein the subset of the more than one high priority channel comprises a single high priority channel and resolving the overlap comprises resolving the overlap between the low priority channel and the single high priority channel.

8. The method of Claim 7 wherein the single high priority channel comprises any one of an overlapping high priority channel that starts the earliest and an overlapping high priority channel that has a longest length.

9. The method of any of Claims 1-8, wherein resolving the overlap includes creating a new channel and resolving the overlap comprises resolving any overlaps in the new channel.

10. The method of any of Claims 1-9, wherein responsive to a high priority physical uplink shared channel, PUSCH, or a high priority physical uplink control channel, PUCCH, overlapping with a low priority PUCCH that contains hybrid automatic repeat request, HARQ,-feedback and other low priority uplink control information, UCI, resolving the overlap comprises multiplexing the low priority HARQ-feedback onto the high priority PUSCH or the high priority PUCCH and not the other low priority UCI.

11. The method of any of Claims 1-10, wherein responsive to a high priority physical uplink control channel, PUCCH, carrying high priority uplink control information, UCI, overlaps with a low priority physical uplink shared channel, PUSCH, resolving the overlap comprises multiplexing the high priority UCI from the high priority PUCCH onto the low priority PUSCH.

12. The method of Claim 11 wherein multiplexing the high priority UCI from the high priority PUCCH onto the low priority PUSCH comprises puncturing the high priority UCI into the low priority PUSCH.

13. The method of any of Claims 1-11 wherein responsive to a low priority physical uplink shared channel, PUSCH overlaps with a high priority physical uplink control channel, PUCCH, that contains hybrid automatic repeat request, HARQ, -feedback and other high priority uplink control information, UCI, resolving the overlap comprises multiplexing the high priority HARQ-feedback onto the low priority PUSCH or the high priority PUCCH and not the other high priority UCI.

14. The method of Claims 1-13 wherein resolving the overlap comprises resolving collisions between overlapping physical uplink shared channel, PUSCH, before resolving other overlapping channels.

15. The method of Claim 14 wherein resolving collisions between overlapping PUSCH comprises dropping low priority PUSCH that collide with high priority PUSCH.

LP PUSCH

AFTER FIRST AND SECOND MULTIPLEXING, THE REMAINING CONFLICT BETWEEN LP PUSCH AND HP + LP PUCCH RESOLVED BY STOPPING\CANCELLING LP PUSCH

FIRST MULTIPLEXING

LP PUCCH

HP PUCCH

SECOND MULTIPLEXING

HP + LP PUCCH

**Figure 1**

7-SYMBOL SUBSLOT

LOW PRIORITY

PUCCH1

PUCCH2

HIGH PRIORITY

PUCCH3 | PUCCH4

2-SYMBOL SUBSLOT

**Figure 2**

Figure 3

407

COMMUNICATION DEVICE UE
(400)

TRANSCEIVER
401

PROCESSOR
403

MEMORY
405

## Figure 4

RADIO ACCESS NETWORK (RAN) NODE
500

TRANSCEIVER
501

NETWORK
INTERFACE
507

PROCESSOR
503

MEMORY
505

## Figure 5

CORE NETWORK (CN) NODE
600

NETWORK
INTERFACE
607

PROCESSOR
603

MEMORY
605

## Figure 6

RUNNING A MULTIPLEXING PROCEDURE FOR ALL CHANNELS DESIGNATED AS LOW PRIORITY CHANNELS WITHOUT CONSIDERING PRESENCE OF CHANNELS DESIGNATE AS HIGH PRIORITY CHANNELS TO CREATE A SET OF NON-OVERLAPPING LOW PRIORITY CHANNELS
701

RUNNING A MULTIPLEXING PROCEDURE FOR ALL CHANNELS DESIGNATED AS HIGH PRIORITY CHANNELS WITHOUT CONSIDERING PRESENCE OF CHANNELS DESIGNATE AS LOW PRIORITY CHANNELS TO CREATE A SET OF NON-OVERLAPPING HIGH PRIORITY CHANNELS
703

RESPONSIVE TO THERE BEING AN OVERLAP BETWEEN A NON-OVERLAPPING LOW PRIORITY CHANNEL AND A NON-OVERLAPPING HIGH PRIORITY CHANNEL, RESOLVING THE OVERLAP
705

## Figure 7

RESPONSIVE TO HIGH-PRIORITY PUCCHS BEING CONFIGURED WITH A DIFFERENT SUB-SLOT CONFIGURATION THAN LOW-PRIORITY PUCCHS, MODIFYING TIMELINE CONDITIONS BY FULFILLING MULTIPLEXING TIMELINE CONDITIONS FOR EACH SUB-GROUP OF CHANNELS THAT STARTS IN A SUBSLOT, WHERE THE SUBSLOT RESOLUTION IS DETERMINED BY THE SHORTEST SUBSLOT AMONG THE OVERLAPPING GROUP OF CHANNELS

801

RESPONSIVE TO THERE BEING A CHANNEL OUTSIDE A SUB-GROUP SUCH THAT MULTIPLEXING TIMELINE CONDITIONS ARE NOT FULFILLED FOR THE GROUP INCLUDING THE CHANNEL AND THE SUB-GROUP, RESOLVING THE OVERLAP COMPRISES STOPPING/CANCELLING LOW PRIORITY CHANNELS

803

# Figure 8

# Figure 9

910b WIRELESS DEVICE

960b NETWORK NODE

906 NETWORK

910c WIRELESS DEVICE

WIRELESS SIGNAL

962 ANTENNA(S)

**910 WIRELESS DEVICE**

911 ANTENNA(S)

914 INTERFACE

912 RADIO FRONT END CIRCUITRY

918 FILTER(S) | 916 AMPLIFIER(S)

937 POWER CIRCUITRY

922 RF TRANCEIVER CIRCUITRY | 926 APPLICATION PROCESSING CIRCUITRY

924 BASEBAND CIRCUITRY | 920 PROCESSING CIRCUITRY

930 DEVICE READABLE MEDIUM | 932 USER INTERFACE EQUIPMENT

934 AUXILIARY EQUIPMENT

936 POWER SOURCE

**960 NETWORK NODE**

992 RADIO FRONT END CIRCUITRY

998 FILTER(S)

996 AMPLIFIER(S)

994 PORTS/ TERMINALS

990 INTERFACE

987 POWER CIRCUITRY

972 RF TRANCEIVER CIRCUITRY

974 BASEBAND CIRCUITRY | 970 PROCESSING CIRCUITRY

980 DEVICE READABLE MEDIUM

984 AUXILIARY EQUIPMENT

986 POWER SOURCE

EP 4 694 443 A2

38

# Figure 10

1043B NETWORK

1043A NETWORK

1000

| 1001 PROCESSOR | 1005 INPUT/OUTPUT INTERFACE | 1009 RF INTERFACE | 1011 NETWORK CONNECTION INTERFACE | 1013 POWER SOURCE |

1002 BUS

1015 MEMORY

1017 RAM

1019 ROM

1021 STORAGE MEDIUM
1023 OPERATING SYSTEM
1025 APPLICATION PROGRAMS
1027 DATA

1031 COMMUNICATION SUBSYSTEM

1033 TRANSMITTER

1035 RECEIVER

EP 4 694 443 A2

# Figure 11

**Figure 12**

**1310 Host computer**

**1311 SW**

**1312 HOST APPLICATION**

**1315 HW**

**1316 COMMUNICATION INTERFACE**

**1318 PROCESSING CIRCUITRY**

1360

**1320 BASE STATION**

**1321 SW**

**1325 HW**

**1326 COMMUNICATION INTERFACE**

**1327 RADIO INTERFACE**

**1328 PROCESSING CIRCUITRY**

1370

**1330 UE**

**1331 SW**

**1332 CLIENT APPLICATION**

**1335 HW**

**1337 RADIO INTERFACE**

**1338 PROCESSING CIRCUITRY**

1300

1350

# Figure 13

BEGIN

1410
HOST COMPUTER
PROVIDES USER
DATA

1411
HOST
COMPUTER
EXECUTES HOST
APPLICATION

1420
HOST COMPUTER
INITIATES
TRANSMISSION
CARRYING THE
USER DATA TO
THE UE

1430
BASE STATION
TRANSMITS THE
USER DATA

1440
UE EXECUTES
CLIENT
APPLICATION

END

**Figure 14**

BEGIN

1510
HOST COMPUTER
PROVIDES USER
DATA

1520
HOST COMPUTER
INITIATES
TRANSMISSION
CARRYING THE
USER DATA TO THE
UE

1530
UE RECEIVES THE
USER DATA

END

**Figure 15**

BEGIN

1610
UE RECEIVES INPUT
DATA PROVIDED AT
HOST COMPUTER

1611
UE EXECUTES
CLIENT
APPLICATION

1620
UE PROVIDES
USER DATA

1621
UE EXECUTES
CLIENT
APPLICATION

1630
UE INITIATES
TRANSMISSION OF
THE USER DATA TO
THE HOST
COMPUTER

1640
HOST COMPUTER
RECEIVES USER
DATA TRANSMITTED
FROM THE UE

END

**Figure 16**

BEGIN

1710
BASE STATION
RECEIVES USER
DATA FROM UE

1720
BASE STATION
INITIATES
TRANSMISSION OF
USER DATA TO THE
HOST COMPUTER

1730
HOST COMPUTER
RECEIVES THE
USER DATA

END

**Figure 17**